(19) Europäisches Patentamt / European Patent Office / Office européen des brevets

(11) **EP 3 437 851 B1**

(12) **EUROPEAN PATENT SPECIFICATION**

(45) Date of publication and mention of the grant of the patent:
**24.12.2025 Bulletin 2025/52**

(21) Application number: **17775219.3**

(22) Date of filing: **29.03.2017**

(51) International Patent Classification (IPC):
$C08J\ 5/04$ (2006.01)  $\quad$ $B32B\ 5/26$ (2006.01)
$B32B\ 5/12$ (2006.01)  $\quad$ $B29C\ 70/22$ (2006.01)
$B29C\ 70/38$ (2006.01)  $\quad$ $B32B\ 7/12$ (2006.01)
$B32B\ 5/08$ (2006.01)

(52) Cooperative Patent Classification (CPC):
**B29C 70/228; B29C 70/382; B32B 5/08; B32B 5/12; B32B 5/26; B32B 7/12; C08J 5/04;** B32B 2250/02; B32B 2250/20; B32B 2255/02; B32B 2255/205; B32B 2255/26; B32B 2260/023; B32B 2260/046; B32B 2262/0269; $\quad$ (Cont.)

(86) International application number:
**PCT/JP2017/012881**

(87) International publication number:
**WO 2017/170685 (05.10.2017 Gazette 2017/40)**

(54) **REINFORCED FIBER LAMINATE SHEET, FIBER-REINFORCED RESIN MOLDED BODY, AND METHOD FOR MANUFACTURING REINFORCED FIBER LAMINATE SHEET**

VERSTÄRKTE FASERLAMINATSCHICHT, FASERVERSTÄRKTER HARZFORMKÖRPER UND VERFAHREN ZUR HERSTELLUNG EINER VERSTÄRKTEN FASERLAMINATSCHICHT

FEUILLE STRATIFIÉE À FIBRES RENFORCÉES, CORPS MOULÉ EN RÉSINE RENFORCÉE DE FIBRES ET PROCÉDÉ DE FABRICATION DE FEUILLE STRATIFIÉE À FIBRES RENFORCÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 JP 2016070827**
**31.03.2016 JP 2016070828**

(43) Date of publication of application:
**06.02.2019 Bulletin 2019/06**

(73) Proprietor: **Toray Industries, Inc.**
**Tokyo 103-8666 (JP)**

(72) Inventors:
• **MIURA, Shingo**
**Nagoya-shi**
**Aichi 455-8502 (JP)**
• **SATO, Masayuki**
**Nagoya-shi**
**Aichi 455-8502 (JP)**
• **HINO, Toyokazu**
**Nagoya-shi**
**Aichi 455-8502 (JP)**

(74) Representative: **Hoefer & Partner Patentanwälte mbB**
**Pilgersheimer Straße 20**
**81543 München (DE)**

(56) References cited:
**JP-A- 2005 022 396**  $\quad$ **JP-A- 2006 192 745**
**JP-A- 2007 276 453**  $\quad$ **JP-A- 2008 132 650**

**(Cont. next page)**

(52) Cooperative Patent Classification (CPC): (Cont.)
B32B 2262/10; B32B 2262/101; B32B 2262/103;
B32B 2262/105; B32B 2262/14; B32B 2535/00;
B32B 2603/00; B32B 2605/003; B32B 2605/18;
C08J 2363/00

**Description**

TECHNICAL FIELD

The present invention relates to a reinforced fiber laminate sheet, a fiber-reinforced resin molded body made from the reinforced fiber laminate sheet and a matrix resin, and a method for manufacturing a reinforced fiber laminate sheet.

BACKGROUND ART

Fiber reinforced plastics (FRPs), in particular, carbon fiber reinforced plastics (CFRPs) made from carbon fibers are light and excellent in mechanical properties such as strength and rigidity. Therefore, in recent years, FRPs are increasingly applied to transportation equipment in aerospace, automobiles, sports applications, or industrial applications, for example, based on their properties.

As representative methods for manufacturing FRPs, autoclave molding, resin transfer molding (RTM), and vacuum assisted resin transfer molding (VaRTM) are known. Until now, autoclave molding using a prepreg has been employed for obtaining aircraft members that are particularly required to have high reliability and quality. In this method, for example, prepregs made of a group of reinforced fiber bundles that are arranged in one direction and are preimpregnated with a matrix resin are laminated in a molding die, covered with a bag material as needed, and heated and pressurized in an autoclave to give a molded body made from an FRP.

In recent years, in the step of laminating prepregs, an automatic tape layup (ATL) machine for laminating narrowly slit prepregs is used. Use of the ATL machine is aimed at automation of the lamination step and improvement in the material yield particularly for members not so uneven and having a wide surface shape. However, it is difficult to apply this machine to an uneven member or a member having a three-dimensionally complicated shape. For this reason, attempts have been made to deform the laminate of prepregs with a draping die adapted to a desired shape. However, prepregs do not have sufficient deformability to fine unevenness or a complicated three-dimensional shape since the impregnated matrix resin binds the reinforced fibers together. This leads to wrinkle generation and adversely affects mechanical properties.

Furthermore, for obtaining aircraft members by molding using prepregs, expensive autoclave equipment is generally used. In particular, a huge autoclave is used for obtaining large-sized members such as main wings and tail wings by molding, and it is difficult to reduce the manufacturing cost.

Therefore, use of the RTM and VaRTM that do not require a large-sized autoclave and can shorten the cycle time has been studied. In these molding methods, a molded body made from an FRP is obtained by placing, in a molding die, a laminate of substrates such as a dry fabric not impregnated with a matrix resin, or a molding precursor called a preform that is obtained by further draping the laminate into a desired shape, clamping the molding die, and then injecting a low-viscosity liquid matrix resin into the molding die to impregnate the reinforced fiber with the matrix resin. The substrates that have been used in these molding methods, such as a dry fabric, are a textile substrate obtained by weaving reinforced fiber bundles into a plain weave or a twill weave, and a non-crimpled substrate obtained by engaging reinforced fiber bundles aligned in parallel by a method such as stitching with an auxiliary yarn for form retention. Both of these substrates are reinforced fiber substrates having a form in which preliminarily produced reinforced fiber bundles adjacent to each other in the surface of a fabric are preliminarily bound together to be integrated, and the reinforced fiber bundles are continuous in the longitudinal direction at a constant width and a constant basis weight. Therefore, in these substrates, the reinforced fibers are not strongly bound together by the matrix resin. Therefore, these substrates have characteristics that they can be deformed into a desired shape even if it is a complicated three-dimensional shape such as a curved shape or an uneven shape more easily than prepregs do, and can suppress wrinkles that adversely affect mechanical properties if the substrates are appropriately draped.

Furthermore, in recent years, also in the RTM and VaRTM, automated fiber placement (AFP) of sequentially arranging required lengths of reinforced fibers only at positions where the reinforced fibers are required to give a reinforced fiber substrate has been attracting attention as a technique that is high in productivity and is capable of greatly reducing the amount of waste of reinforced fibers.

In the AFP, dry reinforced fiber bundles are formed into a sheet form, for example, by aligning the dry reinforced fiber bundles in one direction in a planar shape to form one reinforced fiber bundle layer, and binding adjacent reinforced fiber bundles together, or laminating a plurality of reinforced fiber bundle layers and binding the layers together. Attempts have been made to bind the reinforced fiber bundles (reinforced fiber bundle layers) into a sheet form by means of binding by attachment with a resin, or binding by suture with a suture thread, for example.

For example, Patent Document 1 discloses a technique of forming reinforced fiber bundles into a sheet form by arranging a plurality of reinforced fiber bundles in one direction on a predetermined position of a sheet-shaped base substrate, and randomly attaching the reinforced fiber bundles onto the base substrate. The technique made it possible to integrate the reinforced fiber bundles into a reinforced fiber sheet based on the attachment of the reinforced fiber bundles to the base substrate.

Meanwhile, apart from the AFP, as disclosed in Patent Document 2, there is known a reinforced fiber substrate including a fixing material made from a thermoplastic resin material placed between a unidirectional reinforced fiber layer and another unidirectional reinforced fiber layer having a different fiber orientation from the fiber orientation of the above-mentioned reinforced fiber layer to thermally fuse the reinforced fiber layers together.

Further, as means for binding reinforced fiber layers together, for example, as disclosed in Patent Document 3, there is known a technique of partially fixing reinforced fiber layers each having a fixing material together to improve deformability of the reinforced fiber laminate.

The techniques disclosed in Patent Documents 2 and 3 are effective for a laminate of textile substrates in which adjacent reinforced fiber bundles are bound together by a filling yarn, or an auxiliary yarn, for example.

Patent Document 4 teaches a reinforcing fiber laminate which is improved in handleability or shaping properties, and resin impregnation properties at the time of molding while keeping the advantage of a unidirectional reinforcing fiber base material, for obtaining a surface grade at the time of production of a molded object, and also to provide its manufacturing method. The reinforcing fiber laminate is constituted by superposing two unidirectional reinforcing fiber base material layers, in which the reinforcing fibers are unidirectionally arranged, one upon another so as to mutually fix them by the binding material comprising a thermoplastic resin interposed between the two layers, and integrally handles two unidirectional reinforcing fiber base material layers.

Patent Document 5 teaches a reinforcing fiber base material, which is excellent in the impregnation properties of a matrix resin and develops high dynamic characteristics when FRP is molded, and a preform constituted of the reinforcing fiber base material. The reinforcing fiber base material is constituted by arranging reinforcing fiber yarns at least in one direction and a resin material with a glass transition point of 20-150°C is bonded at least to one side of the reinforcing fiber base material within a range of 5-20 wt.%. In a state that a plurality of the reinforcing fiber base materials are mutually bonded, the ratio R of an impregnation distance L in a 0° direction to an impregnation distance T in a 90° direction: R=(impregnation distance L)/(impregnation distance T) is 1.5-10.

Patent Document 6 teaches a composite material showing excellence in handling, mechanical properties (compression strength in particular) and dimensional accuracy. Further described is a reinforced fiber base material enabling production of the composite material in good productivity. The reinforced fiber base material is composed of at least a group of reinforcing fibers obtained by arranging continuous reinforcing fibers in one direction in parallel. At least one surface of the reinforced fiber base material has 2 to 15wt.% of a resin material mainly composed of a thermoplastic resin, and a volume fraction Vpf of the reinforcing fibers calculated from the thickness of the reinforced fiber base material measured according to JIS-R7602 is 40 to 60%.

PRIOR ART DOCUMENTS

PATENT DOCUMENTS

Patent Document 1: Japanese Patent Laid-open Publication No. 2014-159099

Patent Document 2: Japanese Patent Laid-open Publication No. 2009-235182

Patent Document 3: Japanese Patent Laid-open Publication No. 2007-276453

Patent Document 4: Japanese Patent Laid-open Publication No. 2008-132650

Patent Document 5: Japanese Patent Laid-open Publication No. 2006-192745

Patent Document 6: Japanese Patent Laid-open Publication No. 2005-022396

SUMMARY OF THE INVENTION

PROBLEMS TO BE SOLVED BY THE INVENTION

However, in the reinforced fiber sheet produced by the method disclosed in Patent Document 1, although the base substrate has slits, the reinforced fiber sheet is relatively low in drapability and incapable of being adequately draped without generation of wrinkles or rucking of the reinforced fibers as for a complicated three-dimensional shape having a large curved surface. The method also has a problem that an unnecessary base substrate must be used depending on the molded article.

The techniques disclosed in Patent Documents 2 and 3 cannot be employed in integrating reinforced fiber bundles that are arranged by the AFP and are not directly bound together to form the reinforced fiber bundles into a sheet. In these techniques, sheets in which adjacent fibers are bound together by the weave structure are merely partially fixed together, and these techniques do not provide any means for achieving the object of fixing "aligned adjacent reinforced fibers that are different in length from each other" together, which is specific to sheets obtained by the AFP. In other words, these patent documents do not disclose any means for achieving the object of binding unbound reinforced fiber bundles together with adequate fixing force to drape the reinforced fiber bundles without disturbing the fiber orientation and without generation of wrinkles or rucking of the reinforced fibers, which is specific to the case of binding reinforced fiber bundle layers obtained by the AFP together. Therefore, a reinforced fiber laminate sheet having sufficient drapability cannot be obtained even with reference to these patent documents.

As described above, it was previously impossible to realize a reinforced fiber laminate sheet having sufficient drapability, which is obtained by binding unbound reinforced fiber bundles together with adequate fixing force without the use of any other substrate such as a base substrate, and is drapable without disturbance of the fiber orientation and without generation of wrinkles or rucking of the reinforced fibers.

Furthermore, if merely the binding force between the reinforced fiber bundles is weakened to improve the drapability, the reinforced fiber bundles are easily displaced or delaminated from each other, so that the form of a reinforced fiber laminate sheet cannot be maintained. As a result, it is impossible to use the reinforced fiber bundles as a reinforced fiber sheet because the reinforced fiber sheet cannot be conveyed to subsequent steps, or the reinforced fiber sheet is wrinkled or rucked or the reinforced fiber bundles are delaminated from each other after the sheet is draped. Needless to say, even if such a reinforced fiber sheet is molded by the RTM, wrinkles, for example, remain in the reinforced fiber layer in the resulting molded body, and it is absolutely impossible to obtain desired mechanical properties.

In view of the state of art as described above, it is therefore an object of the present invention to provide a reinforced fiber laminate sheet capable of being handled as a sheet owing to integration of adjacent reinforced fiber bundles that are not directly bound together, and is also capable of deforming following the shape of a die in draping while retaining the sheet form, and a method for manufacturing the reinforced fiber laminate sheet. It is another object of the present invention to provide, using the reinforced fiber laminate sheet, a fiber-reinforced resin molded body that has no defects such as wrinkles generated during the draping and is excellent in molded body properties.

SOLUTIONS TO THE PROBLEMS

It has been studied to use a resin binder as a fixing material for binding the fiber bundle layers together in the AFP. However, it is difficult to achieve the conflicting properties of drapability and form stability of the sheet by the combination of the conventional techniques.

Then, as a result of earnest studies, the present inventors have found that it is possible to obtain a reinforced fiber laminate sheet excellent in both drapability and form stability of the sheet by fixing, in a specific form, a fixing element present between unidirectional reinforced fiber bundle layers that are arranged to have different fiber orientations from each other. The "fixing element" means a fixing material involved in fixation among fixing materials present between the reinforced fiber bundle layers.

The present invention is defined in the appended claims.

EFFECTS OF THE INVENTION

The reinforced fiber laminate sheet of the present invention exhibits high drapability while exhibiting the same degree of form stability as that of a conventional textile substrate.

In addition, according to the method for manufacturing a reinforced fiber laminate sheet of the present invention, it is possible to obtain the reinforced fiber laminate sheet of the present invention.

Further, the fiber-reinforced resin molded body of the present invention has no defects caused by wrinkles made during the draping, and is excellent in molded body properties.

BRIEF DESCRIPTION OF THE DRAWINGS

Fig. 1 is a schematic view showing an example of a reinforced fiber laminate sheet of the present invention.
Figs. 2a to 2g are schematic views each showing an example of a grid of fixing portions in the present invention.
Fig. 3 is a schematic view showing an example of the reinforced fiber laminate sheet of the present invention.
Fig. 4 is a flowchart showing one embodiment of a method for manufacturing a reinforced fiber laminate sheet of the present invention.

Fig. 5 is a schematic view for illustrating a relationship among fixing elements, fixing portions, and fixing regions of the present invention.

Fig. 6 is a flowchart showing another embodiment of the method for manufacturing a reinforced fiber laminate sheet of the present invention.

Fig. 7 is a schematic perspective view of a simple element shape die used in evaluating the drapability of the reinforced fiber laminate sheet of the present invention.

Fig. 8 is a perspective view of a model shape die 1 used in evaluating the drapability of the reinforced fiber laminate sheet of the present invention as well as molded body properties of a fiber-reinforced resin molded body.

Fig. 9 is a perspective view of a model shape die 2 used in evaluating the drapability of the reinforced fiber laminate sheet of the present invention as well as molded body properties of the fiber-reinforced resin molded body.

EMBODIMENTS OF THE INVENTION

A reinforced fiber laminate sheet of the present invention is a reinforced fiber laminate sheet including: a first reinforced fiber bundle layer and a second reinforced fiber bundle layer that are each formed of a plurality of reinforced fiber bundles aligned in one direction, that are arranged to have different fiber orientations from each other, and in which reinforced fiber bundles in one layer have no direct binding force between each other, the first reinforced fiber bundle layer and the second reinforced fiber bundle layer being fixed to each other by a fixing element so that the first reinforced fiber bundle layer and the second reinforced fiber bundle layer are integrated with each other, the reinforced fiber laminate sheet satisfying the following conditions (i) and (ii):

(i) the reinforced fiber laminate sheet has one or more fixing portions each including at least one fixing element at a fixing surface between the first reinforced fiber bundle layer and the second reinforced fiber bundle layer, and the fixing portions have an average area $S_1$ of 100 mm$^2$ or less; and

(ii) in each of the fixing portions, an area rate of the fixing element to the fixing portion is 0.1% or more and 80% or less.

In the present invention, the "fixing material" means a resin that is attached to the reinforced fiber bundles and is softened by heating. The "fixing element" means a fixing material involved in fixation among fixing materials present between the first and second reinforced fiber bundle layers. Herein, among the fixing materials, fixing elements involved in fixation and fixing materials not involved in fixation are distinguished by the following method. First, a reinforced fiber bundle layer not having a fixing material is observed with a digital microscope (VHX-1000 manufactured by Keyence Corporation) and used as a control. Then, two reinforced fiber bundle layers that constitute a reinforced fiber laminate sheet are delaminated from each other, and fixing materials attached to the reinforced fiber bundle layers are observed with a digital microscope (VHX-1000 manufactured by Keyence Corporation). The images of the fixing materials obtained by the above-mentioned method are classified into a case where traces of the fixing materials attached to the reinforced fiber bundle layers having different orientations from each other are recognized and a case where such traces are not recognized, and the fixing materials in the former case are judged as fixing elements. As for the criterion for the judgment, a case where the state in which the fixing materials are applied to the fixing surface is preserved is regarded as a case where traces of the fixing materials attached to the reinforced fiber bundle layers are not recognized. On the other hand, a case where streaky traces in the orientation direction of the reinforced fiber bundles remain on the fixing materials is regarded as a case where traces of the fixing materials attached to the reinforced fiber bundle layers having different orientations from each other are recognized.

In the present invention, the "fixing portion" means a portion determined by the following procedure.

1) If the distance between a fixing element and another fixing element is 1 mm or less, these fixing elements are assumed to be continuous with each other.

2) A set of fixing elements that are directly or indirectly continuous with each other is regarded as a fixing element group. As for fixing elements that are not continuous with any other fixing element, one fixing element is regarded as one fixing element group.

3) A part surrounded by a smallest circle including all the fixing elements belonging to one fixing element group is regarded as a fixing portion. Further, areas of circles defined as fixing portions are calculated, and the average area of all the fixing portions included in the reinforced fiber sheet is defined as $S_1$.

In the present invention, the "fixing region" means a region determined by the following procedure.

1) If the distance between a fixing portion and another fixing portion is 100 mm or less, these fixing portions are assumed to be continuous with each other.

2) A set of fixing portions that are directly or indirectly continuous with each other is regarded as a fixing portion group. A set of fixing portions composed of two or less fixing portions, or a set of fixing portions that is composed of two or more fixing portions and in which all the fixing portions line up in a straight line is not a fixing portion group.

3) A polygon that is obtained by connecting the centers of fixing portions belonging to one fixing portion group with a straight line, and that has a largest area among polygons each including all the fixing portions belonging to the fixing portion group in the inside or on the periphery thereof is regarded as a fixing region. Further, the average area of all the fixing regions included in the reinforced fiber laminate sheet is defined as $S_2$.

In the present invention, the "drapability" means a property that the reinforced fiber laminate sheet is easy to follow a three-dimensional mold without generation of wrinkles of the sheet or rucking of the fibers. The "form stability" means a property that the reinforced fiber bundles are not delaminated from each other and remain being bound together even in draping, and are capable of retaining the integrity as a sheet. The drapability and form stability are both evaluated by the methods described later.

Hereinafter, desirable embodiments of the present invention will be described with reference to the drawings. It should be noted that the present invention is not limited to the inventions shown in the drawings.

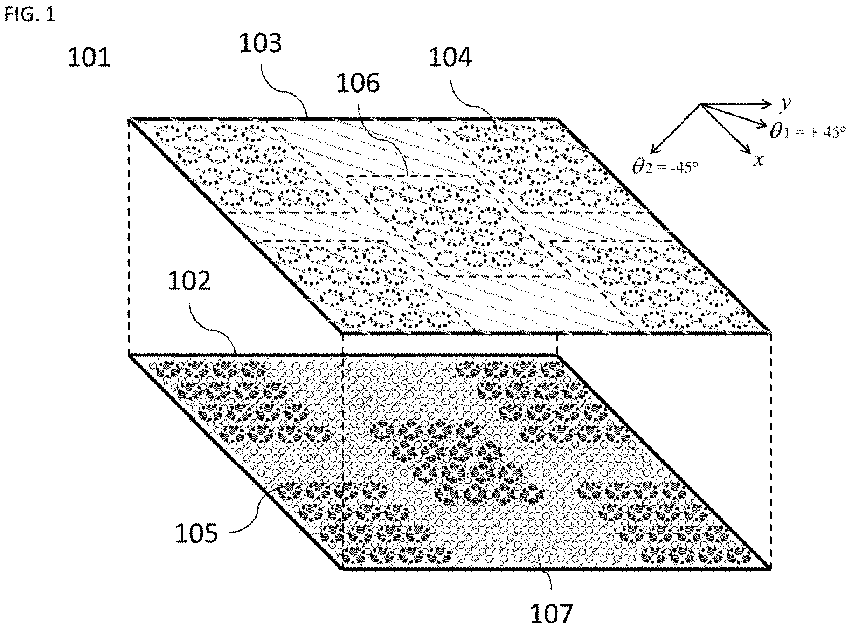

Fig. 1 is a schematic view showing an embodiment of a reinforced fiber laminate sheet of the present invention. A reinforced fiber laminate sheet 101 in Fig. 1 is a reinforced fiber laminate sheet including reinforced fiber bundle layers 102 and 103 that are each formed of a plurality of reinforced fiber bundles aligned in one direction, that are arranged to have different fiber orientations from each other, and in which reinforced fiber bundles in one layer have no direct binding force between each other. Fig. 1 shows an example in which layers of reinforced fiber bundles are laminated in such a manner that the fiber orientation of the reinforced fiber bundles is $\pm 45°$ (fiber orientation $\theta_1$ of the first reinforced fiber bundle layer 102 = +45°, fiber orientation $\theta_2$ of the second reinforced fiber bundle layer 103 = -45°).

Furthermore, the reinforced fiber bundle layers 102 and 103 are fixed to each other by fixing elements 105 present in fixing portions 104.

Fig. 1 shows an example in which the fixing portions 104 are arranged to be positioned at the intersections of a square grid, and five fixing regions 106 are provided in the rectangular reinforced fiber laminate sheet 101. Fixing materials 107, which are present between the reinforced fiber bundle layers but are not involved in fixation, are not fixing elements and do not bind the reinforced fibers together.

The reinforced fiber laminate sheet according to the present invention satisfies the following conditions (i) and (ii):

(i) one or more fixing portions each including at least one fixing element, which are present at a fixing surface between the first reinforced fiber bundle layer and the second reinforced fiber bundle layer, have an average area $S_1$ of 100 mm$^2$ or less; and
(ii) in each of the fixing portions, an area rate of the fixing element to the fixing portion is 0.1% or more and 80% or less.

As for the condition (i), when the average area $S_1$ is 100 mm$^2$ or less, preferably 80 mm$^2$ or less, more preferably 60 mm$^2$ or less, the area of the portion where the reinforced fiber bundles are bound together is small, the sheet is easily deformed, and the drapability is improved. The lower limit of the average area $S_1$ is not particularly limited, but the area of the fixing portion is preferably at least 0.01 mm$^2$ that is the minimum detectable size of the fixing element, and is more preferably 1 mm$^2$ or more. This is because if the fixing portion is extremely small and includes a small number of fixing elements inside, the fixing elements may exert weak binding force on the reinforced fibers at the fixing surface.

As for the condition (ii), in each of the fixing portions, the area rate of the fixing element to the fixing portion is 0.1% or more and 80% or less, more preferably 0.1% or more and 50% or less. When the area rate is within the above-mentioned range, it is possible to avoid binding all the reinforced fiber bundles together, so that the strain generated in the reinforced fiber bundles at the time the reinforced fiber laminate sheet is deformed can be eliminated by freely deforming the cross-sectional shape of the reinforced fiber bundles, and it is possible to further improve the drapability of the reinforced fiber laminate sheet. In the present invention, the "area of a fixing element" means the area of a fixing element obtained by projecting the fixing element on the surface of the reinforced fiber laminate sheet from a direction perpendicular to the surface.

The area of fixing elements can be determined by delaminating the reinforced fiber bundle layers that constitute the reinforced fiber laminate sheet from each other, photographing the fixing elements attached to the reinforced fibers with a digital microscope, and binarizing the captured images. The areas of fixing portions and fixing regions are measured by the following measurement methods. More specifically, the reinforced fiber bundle layers having different orientations from each other that constitute the reinforced fiber laminate sheet are delaminated from each other, the fixing elements are distinguished by the above-mentioned method, and the positions of the fixing elements are determined. From the obtained positions of the fixing elements, the areas of the fixing portions and the fixing elements are calculated based on the definitions of the fixing portion and the fixing region described above.

In the reinforced fiber laminate sheet of the present invention, the fixing element may be, for example, derived from a fixing material attached to a reinforced fiber bundle that constitutes a reinforced fiber bundle layer, or derived from a fixing material applied or placed after the formation of a reinforced fiber bundle layer. In either case, when a plurality of reinforced fiber bundle layers are arranged to have different fiber orientations from each other, and then at least a specific position described later is heated, it is possible to melt the fixing material present between the plurality of reinforced fiber bundle layers and realize a state in which at least one fixing element is arranged in a fixing portion in a specific form described later.

In the reinforced fiber laminate sheet of the present invention the reinforced fiber laminate sheet has a fixing region including at least one of the fixing portions at the fixing surface between the first reinforced fiber bundle layer and the second reinforced fiber bundle layer, and an area rate of the fixing region to the reinforced fiber laminate sheet is 30% or more and 100% or less. With this configuration, particularly the form stability and the handling property of the reinforced fiber laminate sheet are easily improved. Herein, the "area of the fixing region" means the total area of all the fixing regions included in the reinforced fiber laminate sheet.

In the reinforced fiber laminate sheet of the present invention, the average area $S_2$ of the fixing regions is preferably 10,000 mm$^2$ or more. When the average area $S_2$ of the fixing regions is 10,000 mm$^2$ or more, particularly the form stability and the handling property of the reinforced fiber laminate sheet are easily improved.

The reinforced fiber laminate sheet of the present invention has at least one fixing region in which an area rate of one or more fixing portions to the fixing region is 1% or more and 50% or less. The area rate of the fixing portions to the fixing region is preferably 1% or more and 25% or less, more preferably 5% or more and 20% or less. When the area rate of the fixing portions to the fixing region is 1% or more, the binding force between the reinforced fiber bundles or between the reinforced fiber bundle layers is strong, and the form stability of the reinforced fiber laminate sheet is improved. On the other hand, when the area rate is 50% or less, the binding force between the reinforced fiber bundle layers is weak, and the drapability of the reinforced fiber laminate sheet is improved. In the case where the reinforced fiber laminate sheet has two or more fixing regions, the "area rate of the fixing portions to the fixing region" means the rate of the total area of the fixing portions present inside each fixing region to the area of the fixing region.

The reinforced fiber laminate sheet of the present invention preferably further satisfies the following condition (iv):
(iv) the reinforced fiber laminate sheet has a fixing region in which centers of the fixing portions are arranged in a polygonal grid.

When the centers of the fixing portions are arranged in a polygonal grid, in draping of the reinforced fiber laminate sheet, the reinforced fiber laminate sheet is easily deformed with the orientation of the adjacent reinforced fibers keeping uniform positional relationship, so that wrinkles or rucking is less likely to occur, and the drapability is improved. Even if fixing regions in which the centers of the fixing portions are arranged in a polygonal grid are partially present during the draping in some positions of the reinforced fiber laminate sheet where the reinforced fiber laminate sheet is easily wrinkled, the drapability is improved.

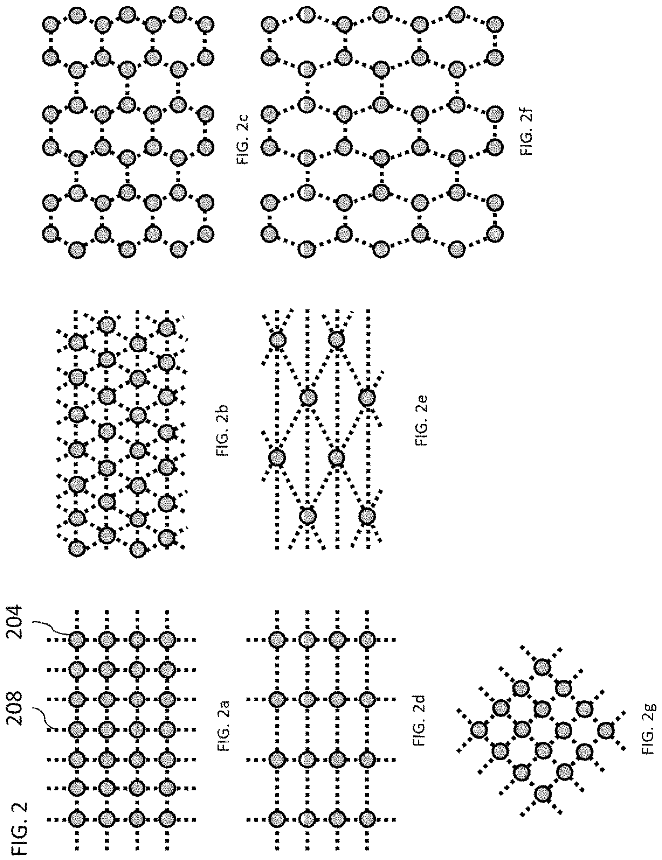

Herein, the phrase that "centers of the fixing portions are arranged in a polygonal grid" means a state where fixing portions 204 are arranged in a grid 208 as shown in Fig. 2, for example. The grid may be a square grid (Fig. 2a), an equilateral triangular grid (Fig. 2b), a regular hexagonal grid (Fig. 2c), as well as a rectangular grid (Fig. 2d), a triangular grid (Fig. 2e), and a hexagonal grid (Fig. 2f). Examples of the grid in the present invention also include a form of a grid that is obtained by rotating the above-mentioned forms (see, for example, Fig. 2g). In the present invention, the phrase "arranged in a grid" means a state where the centers of the fixing portions are arranged in a grid in a region of 50% or more, preferably 70% or more, more preferably 90% or more, still more preferably 100% of the fixing region, and the fixing region may partially include defects.

The reinforced fiber laminate sheet of the present invention preferably further satisfies the following condition (v):
(v) centers of the fixing portions are arranged in a regular polygonal grid having a side length $L_1$ (mm), and the length $L_1$ (mm) satisfies the following expression (1):

$$1 \leq L_1 \leq 50 \qquad (1).$$

When $1 \leq L_1$ is satisfied, since the adjacent fixing portions are arranged at a distance, adjacent reinforced fibers easily change the position and orientation uniformly during the draping, wrinkles or rucking is less likely to occur, and the drapability is easily improved. When $L_1 \leq 50$ is satisfied, since the fixing portions are not too far apart from each other, and easily support unbound reinforced fibers, the form stability of the reinforced fiber laminate sheet is easily improved.

In the reinforced fiber laminate sheet of the present invention, it is more preferable that the radius r (mm) of the fixing portion satisfy the following expression (3):

EP 3 437 851 B1

$$0.5 \le r \le L_1/3 \quad (3).$$

When 0.5 ≤ r is satisfied, the binding force between the reinforced fibers is easily exerted by the fixing portion at the fixing surface, and the form stability of the reinforced fiber laminate sheet is easily improved. When $r \le L_1/3$ is satisfied, not too large fixing portions discretely bind the reinforced fibers together, adjacent reinforced fibers easily change the position and orientation uniformly during the draping, wrinkles or rucking is less likely to occur during the draping, and the drapability is easily improved.

Next, constituent elements of the reinforced fiber laminate sheet of the present invention will be described.

The reinforced fiber laminate sheet of the present invention is a reinforced fiber laminate sheet including: a first reinforced fiber bundle layer and a second reinforced fiber bundle layer that are each formed of a plurality of reinforced fiber bundles aligned in one direction, that are arranged to have different fiber orientations from each other, and in which reinforced fiber bundles between one layer have no direct binding force between each other, the first reinforced fiber bundle layer and the second reinforced fiber bundle layer being fixed to each other by a fixing element so that the first reinforced fiber bundle layer and the second reinforced fiber bundle layer are integrated with each other. The phrase "reinforced fiber bundle layers that are each formed of a plurality of reinforced fiber bundles aligned in one direction, and in which reinforced fiber bundles in one layer have no direct binding force between each other" means that the form of the reinforced fiber bundles in one layer is not retained by a weave structure or a knitted structure. In other words, the form of the reinforced fiber bundles in the first or second layer is retained by being fixed with the reinforced fiber bundles arranged in the second or first layer, respectively.

This configuration makes it possible to produce a substrate by the AFP, and the substrate is handleable and has both drapability and form stability.

In the present invention, the reinforced fiber bundle layers are each formed of a plurality of reinforced fiber bundles aligned in one direction, and the reinforced fiber bundles have no direct binding force between each other. In other words, only a single reinforced fiber bundle layer does not make up a sheet form, and cannot be handled. An example of the single reinforced fiber bundle layer is reinforced fiber bundles arranged in parallel on a table by the AFP. It is preferable not to use any auxiliary yarn or filling yarn since a reinforced fiber bundle layer in which, for example, an auxiliary yarn or a filling yarn is arranged in a direction orthogonal to the reinforced fiber bundles so as to bind the reinforced fiber bundles together reduces the effect of the present invention such as improvement in the drapability and cost reduction.

In addition, the phrase that "the first and second reinforced fiber bundle layers have different fiber orientations from each other" means that the angle between the fiber orientation in the first reinforced fiber bundle layer and the fiber orientation in the second reinforced fiber bundle layer is 5° or more. The angle is preferably 10° or more, more preferably 20° or more. The angle is measured by observing the cross section of a substrate or a molded article. When it is impossible to destroy a molded article, the angle can be measured by transmission observation through X-ray CT scanning.

The reinforced fiber bundle used in the present invention may be, for example, a mixture of a reinforced fiber with an organic fiber, an organic compound, or an inorganic compound, or a reinforced fiber to which a resin component is attached.

The reinforced fiber used in the present invention is not particularly limited, and examples thereof include carbon fibers, glass fibers, aramid fibers, alumina fibers, silicon carbide fibers, boron fibers, metal fibers, natural fibers, and mineral fibers. One of them or two or more of them may be used in combination. In particular, carbon fibers such as polyacrylonitrile (PAN)-based, pitch-based, and rayon-based carbon fibers are preferably used from the viewpoint of high specific strength and high specific rigidity as well as reduction in weight of the molded body. Alternatively, glass fibers can be preferably used from the viewpoint of enhancing the economic efficiency of the resulting molded article. Further, aramid fibers can be preferably used from the viewpoint of enhancing the shock absorbing property of the resulting molded article as well as the drapability. Alternatively, reinforced fibers coated with a metal such as nickel, copper, or ytterbium can also be used from the viewpoint of enhancing the conductivity of the resulting molded body.

In the fixing element used in the present invention, a heat-meltable resin that is capable of being reduced in viscosity by heating can be used. For example, it is possible to use the following resins: crystalline thermoplastic resins including polyesters such as polyethylene terephthalate, polybutylene terephthalate, polytrimethylene terephthalate, polyethylene naphthalate, and liquid crystalline polyesters, polyolefins such as polyethylene, polypropylene, and polybutylene, polyoxymethylene, polyamides, polyarylene sulfides such as polyphenylene sulfide, polyketone, polyether ketone, polyether ether ketone, polyether ketone ketone, polyether nitrile, fluororesins such as polytetrafluoroethylene, and liquid crystal polymers; amorphous thermoplastic resins including styrene resins, polycarbonate, polymethyl methacrylate, polyvinyl chloride, polyphenylene ether, polyimides, polyamide imide, polyether imide, polysulfone, polyether sulfone, and polyarylate; phenolic resins, phenoxy resins, epoxy resins, as well as thermoplastic elastomers such as polystyrene-based, polyolefin-based, polyurethane-based, polyester-based, polyamide-based, polybutadiene-based, polyisoprene-based, fluororesin, and acrylonitrile-based thermoplastic elastomers, copolymers and modified products of these, and resin blends of two or more of these resins. Depending on the intended use, it is also possible to use a mixture of a resin component with additives such as a filler, a conductivity imparting material, a flame retardant, and a flame retardant aid, or with interlayer reinforcing particles.

In the reinforced fiber laminate sheet of the present invention, it is preferable that the fixing element be a heat-meltable resin, and that the heat-meltable resin have a glass transition temperature $T_g$ (°C) or a melting point $T_m$ (°C) of 40°C or higher and 200°C or lower. Such a resin fixes the reinforced fiber bundle layers together when the resin is reduced in viscosity by heating and then returned to normal temperature by cooling, and a constant sheet form is more reliably retained.

As described above, the fixing element used in the present invention may be, for example, (A) a fixing material attached to a reinforced fiber bundle that constitutes a reinforced fiber bundle layer, or (B) a fixing material applied or placed after the formation of a reinforced fiber bundle layer. In the case of (A), a reinforced fiber bundle to which a fixing material is attached can be obtained by attaching the above-mentioned resin in the form of particles, lines, or bands, for example, to the reinforced fiber bundle, or coating the reinforced fiber bundle with the above-mentioned resin. In the case of (B), a reinforced fiber bundle layer to which a fixing material is applied or on which a fixing material is placed can be obtained by attaching, through spraying or the like, the above-mentioned resin in the form of particles, lines, bands, or the like to at least one of the reinforced fiber bundle layers, or by placing a nonwoven fabric, a film, a knitted fabric, a woven fabric, or a net-shaped material made from the above-mentioned resin on at least one of the reinforced fiber bundle layers.

In the reinforced fiber laminate sheet of the present invention, the fixing elements preferably have an average diameter $\varphi$ ($\mu$m) of 10 $\mu$m or more and 500 $\mu$m or less. The average diameter $\varphi$ ($\mu$m) is more preferably 100 $\mu$m or more and 300 $\mu$m or less. With this configuration, the form stability of the reinforced fiber laminate sheet of the present invention can be maintained while further improving the deformability of the reinforced fiber laminate sheet.

In the reinforced fiber laminate sheet of the present invention, the thickness $t_f$ (mm) of a reinforced fiber bundle and the thickness $t_1$ (mm) of a fixing element in the fixing portion preferably satisfy the following expression (2):

$$0.01 \leq t_1/t_f \leq 0.8 \qquad (2).$$

When the thicknesses satisfy the expression (2), it is possible to avoid binding all the reinforced fiber bundles together, so that the strain generated in the reinforced fiber bundles at the time the reinforced fiber laminate sheet is deformed can be eliminated by freely deforming the cross-sectional shape of the reinforced fiber bundles, and it is possible to further improve the drapability of the reinforced fiber laminate sheet. Herein, the "thickness" of a reinforced fiber bundle or a fixing element means the length of the reinforced fiber bundle or the fixing element in the direction perpendicular to the surface of the reinforced fiber laminate sheet.

In the present invention, $t_1$ and $t_f$ are measured in the following manner. Fixing elements in the reinforced fiber laminate sheet are distinguished by the above-mentioned method using a digital microscope (VHX-1000 manufactured by Keyence Corporation). Then, the thicknesses of 10 or more reinforced fiber bundles that constitute the reinforced fiber laminate sheet are measured by changing the focal length of the digital microscope, and the average $t_1$ of the thicknesses is obtained. Then, the thicknesses of the fixing elements present at the measurement sites are measured, and the average $t_f$ of the thicknesses is obtained.

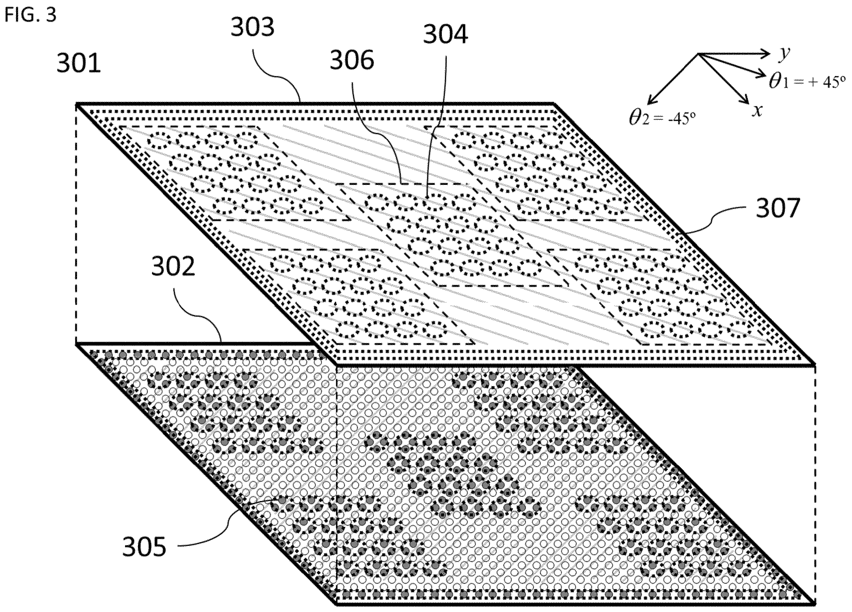

Further, Fig. 3 shows another embodiment of a reinforced fiber laminate sheet 301 of the present invention.

In this embodiment, in an end of the reinforced fiber laminate sheet 301, frame-shaped fixing regions 307 in which reinforced fiber bundle layers 302 and 303 are each fixed in a band shape are provided so that the frame-shaped fixing regions surround fixing regions 306 that include fixing portions 304 including fixing elements 305. With this configuration, fraying and disturbance of the reinforced fiber bundles at the end of the reinforced fiber laminate sheet, which is a problem of a substrate obtained by the AFP, can be further suppressed.

Next, the fiber-reinforced resin molded body of the present invention will be described.

The fiber-reinforced resin molded body of the present invention is made from the reinforced fiber laminate sheet of the present invention and a matrix resin. Such a fiber-reinforced resin molded body can be manufactured, for example, by impregnating the reinforced fiber laminate sheet of the present invention with a matrix resin.

As a method for impregnating the reinforced fiber laminate sheet with a matrix resin, the RTM can be used. More specifically, the RTM is a method of obtaining a molded body in the following manner: placing, in a cavity that is formed by an upper die and a lower die of a molding die, a reinforced fiber laminate sheet draped into the shape of the cavity, clamping the molding die, pressurizing the molding die to make the inside of the cavity substantially vacuum, then injecting a matrix resin into the cavity, and further heating the matrix resin to solidify.

The matrix resin used in the fiber-reinforced resin molded body of the present invention may be a so-called thermoplastic resin, but the matrix resin is preferably a thermosetting resin. The resin may be, for example, an epoxy resin, an unsaturated polyester resin, a vinyl ester resin, a phenolic resin, a urea resin, a melamine resin, a polyimide resin, a copolymer or a modified product of these, or a blend of two or more of these resins. Among them, an epoxy resin is preferably used from the viewpoint of mechanical properties of the resulting molded body.

Then, a method for manufacturing a reinforced fiber laminate sheet of the present invention will be described.

The method for manufacturing a reinforced fiber laminate sheet of the present invention includes the following steps (a) to (c):

(a) a first reinforced fiber bundle layer arrangement step of arranging a plurality of reinforced fiber bundles aligned in one direction on a table to give a first reinforced fiber bundle layer in which the reinforced fiber bundles have no direct binding force between each other;

(b) a second reinforced fiber bundle layer arrangement step of further arranging, on the first reinforced fiber bundle layer, a plurality of reinforced fiber bundles aligned in one direction that is different from a fiber direction of the first reinforced fiber bundle layer to give a second reinforced fiber bundle layer in which the reinforced fiber bundles have no direct binding force between each other, and thus producing a reinforced fiber laminate; and

(c) a sheet forming step of obtaining a reinforced fiber laminate sheet satisfying the following conditions (i) and (ii) using a sheet forming mechanism of partially heating and/or pressurizing the reinforced fiber laminate via a protrusion on a surface in contact with the reinforced fiber laminate to melt a fixing material between the first reinforced fiber bundle layer and the second reinforced fiber bundle layer:

(i) the reinforced fiber laminate sheet has one or more fixing portions each including at least one fixing element, which is a fixing material involved in fixation among fixing materials present between the first and second reinforced fiber bundle layers, so that the first reinforced fiber bundle layer and the second reinforced fiber bundle layer are integrated with each other, at a fixing surface between the first reinforced fiber bundle layer and the second reinforced fiber bundle layer, and the fixing portions have an average area $S_1$ of 100 mm$^2$ or less; wherein "fixing portion" means a portion determined by the following procedure:

1) if the distance between a fixing element and another fixing element is 1 mm or less, these fixing elements are assumed to be continuous with each other;

2) a set of fixing elements that are directly or indirectly continuous with each other is regarded as a fixing element group, wherein as for fixing elements that are not continuous with any other fixing element, one fixing element is regarded as one fixing element group;

3) a part surrounded by a smallest circle including all the fixing elements belonging to one fixing element group is regarded as a fixing portion, wherein areas of circles defined as fixing portions are calculated, and the average area of all the fixing portions included in the reinforced fiber sheet is defined as $S_1$, and

(ii) in each of the fixing portions, an area rate of the fixing element to the fixing portion is 0.1% or more and 80% or less; the reinforced fiber laminate sheet has a fixing region including at least one of the fixing portions at the fixing surface between the first reinforced fiber bundle layer and the second reinforced fiber bundle layer, and an area rate of the fixing region to the reinforced fiber laminate sheet is 30% or more and 100% or less, wherein "fixing region" means a region determined by the following procedure:

1) if the distance between a fixing portion and another fixing portion is 100 mm or less, these fixing portions are assumed to be continuous with each other;

2) a set of fixing portions that are directly or indirectly continuous with each other is regarded as a fixing portion group, wherein a set of fixing portions composed of two or less fixing portions, or a set of fixing portions that is composed of two or more fixing portions and in which all the fixing portions line up in a straight line is not a fixing portion group;

3) a polygon that is obtained by connecting the centers of fixing portions belonging to one fixing portion group with a straight line, and that has a largest area among polygons each including all the fixing portions belonging to the fixing portion group in the inside or on the periphery thereof is regarded as a fixing region, wherein the average area of all the fixing regions included in the reinforced fiber laminate sheet is defined as $S_2$, and

wherein the reinforced fiber laminate sheet has at least one fixing region in which an area rate of one or more fixing portions to the fixing region is 1% or more and 50% or less.

Hereinafter, desirable embodiments of the present invention will be described with reference to the drawings.

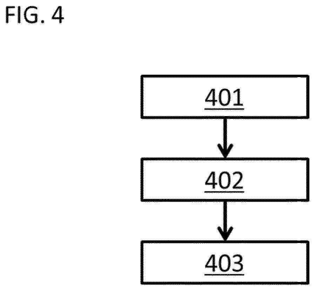

Fig. 4 is a flowchart showing one embodiment of a method for manufacturing a reinforced fiber laminate sheet of the present invention.

In the embodiment shown in Fig. 4, as a first step, a first reinforced fiber bundle layer arrangement step (401) is performed, the step being a step of arranging aligned reinforced fiber bundles on a table to give a first reinforced fiber bundle layer.

Then, as a second step, a second reinforced fiber bundle layer arrangement step (402) is performed, the step being a step of further arranging, on the first reinforced fiber bundle layer, a second reinforced fiber bundle layer to give a reinforced fiber laminate.

Further, as a third step, a sheet forming step (403) is performed, the step being a step of obtaining a reinforced fiber laminate sheet satisfying the conditions (i) and (ii) using a sheet forming mechanism of partially heating and/or pressurizing the reinforced fiber laminate via a protrusion on a surface in contact with the reinforced fiber laminate to melt a fixing material.

The method for manufacturing a reinforced fiber laminate sheet of the present invention includes (a) a first reinforced fiber bundle layer arrangement step of arranging a plurality of reinforced fiber bundles aligned in one direction on a table to give a first reinforced fiber bundle layer in which the reinforced fiber bundles have no direct binding force between each other. In the first reinforced fiber bundle layer arrangement step, as described above, it is preferable to employ a method of arranging the reinforced fiber bundles in parallel on the table by the AFP.

The method for manufacturing a reinforced fiber laminate sheet of the present invention includes (b) a second reinforced fiber bundle layer arrangement step of further arranging, on the first reinforced fiber bundle layer, a plurality of reinforced fiber bundles aligned in one direction that is different from a fiber direction of the first reinforced fiber bundle layer to give a second reinforced fiber bundle layer in which the reinforced fiber bundles have no direct binding force between each other, and thus producing a reinforced fiber laminate. In the second reinforced fiber bundle layer arrangement step, for example, it is possible to align reinforced fiber bundles in one direction on the first reinforced fiber bundle layer to form a second reinforced fiber bundle layer, or to convey a reinforced fiber bundle layer preliminarily formed on another table and arrange the reinforced fiber bundle layer on the first reinforced fiber bundle layer.

The method for manufacturing a reinforced fiber laminate sheet of the present invention includes (c) a sheet forming step of obtaining a reinforced fiber laminate sheet satisfying the conditions (i) and (ii) using a sheet forming mechanism of partially heating and/or pressurizing the reinforced fiber laminate via a protrusion on a surface in contact with the reinforced fiber laminate to melt a fixing material between the first reinforced fiber bundle layer and the second reinforced fiber bundle layer.

When this procedure is performed, it is possible to avoid binding all the reinforced fiber bundles together, so that the strain generated in the reinforced fiber bundles at the time the reinforced fiber laminate sheet is deformed can be eliminated by freely deforming the cross-sectional shape of the reinforced fiber bundles, and it is possible to further improve the drapability of the reinforced fiber laminate sheet.

Then, constituent elements of the method for manufacturing a reinforced fiber laminate sheet of the present invention will be described.

The table used in the present invention may be any table as long as it can at least maintain the arranged reinforced fiber bundles so as not to move. It is preferable that the table have means for adsorbing and holding the reinforced fiber bundles, and that the means have a mechanism based on electrostatic attraction and/or a mechanism based on attractive force generated by flow of air. Use of such a table makes it possible to more reliably hold the reinforced fiber bundles without displacement of the arranged reinforced fiber bundles having no direct binding force.

In the method for manufacturing a reinforced fiber laminate sheet of the present invention, in step (c), a sheet forming mechanism is used, the sheet forming mechanism being a mechanism of partially heating and/or pressurizing the reinforced fiber laminate via a protrusion on a surface in contact with the reinforced fiber laminate to melt a fixing material.

Specific examples of the sheet forming mechanism include a mechanism of heating and/or pressurizing the reinforced fiber laminate with a flat plate-shaped indenter or roller having a protrusion. Use of this sheet forming mechanism melts the fixing material present between the plurality of reinforced fiber bundle layers to realize a state in which at least one fixing element is arranged in the fixing portion in a specific form described later. Then, a portion where the sheet forming mechanism is applied to the reinforced fiber bundle layer serves as a fixing region, and a portion where the protrusion actually comes into contact with the reinforced fiber bundle layer basically serves as a fixing portion.

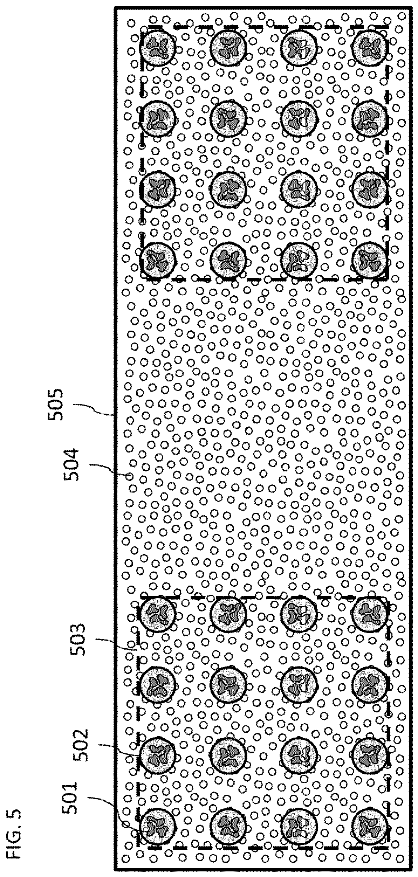

Fig. 5 is a schematic view for illustrating a relationship among fixing elements, fixing portions, and fixing regions as viewed from the viewpoint of the method for manufacturing a reinforced fiber laminate sheet of the present invention. On a first reinforced fiber bundle layer 505, fixing materials 504 are arranged. The reinforced fiber laminate is heated and/or pressurized by a sheet forming mechanism from above a second reinforced fiber bundle layer (not shown) arranged on the fixing materials 504. At this time, a portion heated and/or pressurized by a sheet forming mechanism serves as a fixing region 503, and a portion where the protrusion of the sheet forming mechanism comes into contact with the reinforced fiber laminate serves as a fixing portion 502. Further, the fixing materials 504 in the fixing portions 502 melt and serve as fixing elements 501 that contribute to interlaminar fixing.

In the present invention, the "drapability" means a property that the reinforced fiber laminate sheet is easy to follow a three-dimensional mold without generation of wrinkles of the sheet or rucking of the fibers. The "form stability" means a property that the reinforced fiber bundles are not delaminated from each other and remain being bound together even in draping, and are capable of retaining the integrity as a sheet. The drapability and form stability are both evaluated by the methods described later.

In the method for manufacturing a reinforced fiber laminate sheet of the present invention the reinforced fiber laminate sheet has a fixing region including at least one of the fixing portions at the fixing surface between the first reinforced fiber bundle layer and the second reinforced fiber bundle layer, wherein an area rate of the fixing region to the reinforced fiber laminate sheet is 30% or more and 100% or less. With this configuration, particularly the form stability and the handling property of the reinforced fiber laminate sheet are easily improved.

In the method for manufacturing a reinforced fiber laminate sheet of the present invention, the average area $S_2$ of the fixing regions is preferably 10,000 mm$^2$ or more. When the average area $S_2$ of the fixing regions is 10,000 mm$^2$ or more, particularly the form stability and the handling property of the reinforced fiber laminate sheet are easily improved.

In the method for manufacturing a reinforced fiber laminate sheet of the present invention, the reinforced fiber laminate sheet has at least one fixing region in which an area rate of one or more fixing portions to the fixing region is 1% or more and 50% or less. The area rate of the fixing portions to the fixing region is preferably 1% or more and 25% or less, more preferably 5% or more and 20% or less. When the area rate of the fixing portions to the fixing region is 1% or more, the binding force between the reinforced fiber bundles or between the reinforced fiber bundle layers is strong, and the form stability of the reinforced fiber laminate sheet is improved. On the other hand, when the area rate is 50% or less, the binding force between the reinforced fiber bundle layers is weak, and the drapability of the reinforced fiber laminate sheet is improved. In the case where the reinforced fiber laminate sheet has two or more fixing regions, the area rate of the fixing portions to the fixing region is the rate of the total area of the fixing portions present inside each fixing region in the area of the fixing region.

As described above, the method for manufacturing a reinforced fiber laminate sheet of the present invention preferably further satisfies the following condition (iv):

(iv) the reinforced fiber laminate sheet has a fixing region in which centers of the fixing portions are arranged in a polygonal grid.

When the centers of the fixing portions are arranged in a polygonal grid, as described above, in draping of the reinforced fiber laminate sheet, the reinforced fiber laminate sheet is easily deformed with the orientation of the adjacent reinforced fibers keeping uniform positional relationship, so that wrinkles or rucking is less likely to occur, and the drapability is improved. Even if fixing regions in which the centers of the fixing portions are arranged in a polygonal grid are partially present during the draping in some positions of the reinforced fiber laminate sheet where the reinforced fiber laminate sheet is easily wrinkled, the drapability is improved.

The method for manufacturing a reinforced fiber laminate sheet of the present invention preferably further satisfies the following condition (v):

(v) centers of the fixing portions are arranged in a regular polygonal grid having a side length $L_1$ (mm), and the length $L_1$ (mm) satisfies the following expression (1):

$$1 \le L_1 \le 50 \quad (1).$$

As described above, when the length $L_1$ (mm) is 1 mm or more, the binding force between the reinforced fiber bundle layers can be weakened, and the drapability of the reinforced fiber laminate sheet is easily improved. On the other hand, when the length $L_1$ is 50 mm or less, the binding force between the reinforced fiber bundles or between the reinforced fiber bundle layers can be strengthened, and the form stability of the reinforced fiber laminate sheet is easily improved.

In the method for manufacturing a reinforced fiber laminate sheet of the present invention, it is more preferable that the radius r (mm) satisfy the following expression (3):

$$0.5 \le r \le L_1/3 \quad (3).$$

When the radius r is 0.5 or more, the binding force between the reinforced fibers is easily exerted by the fixing portion at the fixing surface, and the form stability of the reinforced fiber laminate sheet is easily improved. In addition, when the radius r is $L_1/3$ or less, not too large fixing portions discretely bind the reinforced fibers together, adjacent reinforced fibers easily change the position and orientation uniformly during the draping, wrinkles or rucking is less likely to occur during the draping, and the drapability is easily improved.

The method for manufacturing a reinforced fiber laminate sheet of the present invention preferably includes the following step (a1) between steps (a) and (b):

(a1) a fixing material placement step of placing a fixing material on the first reinforced fiber bundle layer.

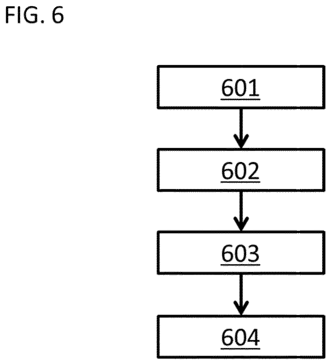

Fig. 6 is a flowchart showing another embodiment of the method for manufacturing a reinforced fiber laminate sheet of the present invention, the method including step (a1).

In the present embodiment, a fixing material placement step (602) of placing a fixing material on the first reinforced fiber bundle layer is performed between a first reinforced fiber bundle layer arrangement step (601) and a second reinforced fiber bundle layer arrangement step (603).

When the method for manufacturing a reinforced fiber laminate sheet of the present invention includes step (a1) between steps (a) and (b), it is possible to place a more appropriate amount of the fixing material, and the reinforced fiber laminate sheet can more reliably exert the function as designed.

When the method includes step (a1), the fixing material can be placed by attaching, through spraying, for example, the above-mentioned heat-meltable resin in the form of particles, lines, or bands, for example, to the first reinforced fiber bundle layer or a surface of the second reinforced fiber bundle layer in contact with the first reinforced fiber bundle layer, or by placing a nonwoven fabric, a film, a knitted fabric, a woven fabric, or a net-shaped material made from the above-mentioned heat-meltable resin on the above-mentioned site.

In the method for manufacturing a reinforced fiber laminate sheet of the present invention, the reinforced fiber bundles in step (a) and/or step (b) are preferably reinforced fiber bundles to which a fixing material is attached. When the reinforced fiber bundles are reinforced fiber bundles to which a fixing material is attached, the reinforced fiber bundles are more rigid, the form change of the reinforced fiber bundles at the time of arrangement is suppressed, and the uniformity of the reinforced fiber bundle layers is improved. As described above, the reinforced fiber bundles to which a fixing material is attached can be obtained, for example, by attaching the above-mentioned resin in the form of particles, lines, or bands, to the reinforced fiber bundles, or coating the reinforced fiber bundles with the above-mentioned resin.

The method for manufacturing a reinforced fiber laminate sheet of the present invention preferably includes the following step (d) simultaneously with or after step (c):

(d) a fixing frame forming step of forming a fixing frame in at least a part of an end of the reinforced fiber laminate sheet.

When the method includes step (d) before step (c), the fixing frame formed in step (d) is sometimes displaced in step (c). Thus, the method preferably includes step (d) simultaneously with or after step (c). Further, when the method includes step (d), a fixing frame fixed in a line or band shape is formed in an end of the reinforced fiber laminate sheet of the present invention, and fraying and disturbance of the reinforced fiber bundles at the end of the reinforced fiber laminate sheet, which is a problem of a substrate obtained by the AFP, can be further suppressed.

EXAMPLES

Hereinafter, the present invention will be described in more detail with reference to examples.

First, the drapability and form stability of the reinforced fiber laminate sheet, and evaluation of the fiber-reinforced resin molded body will be described.

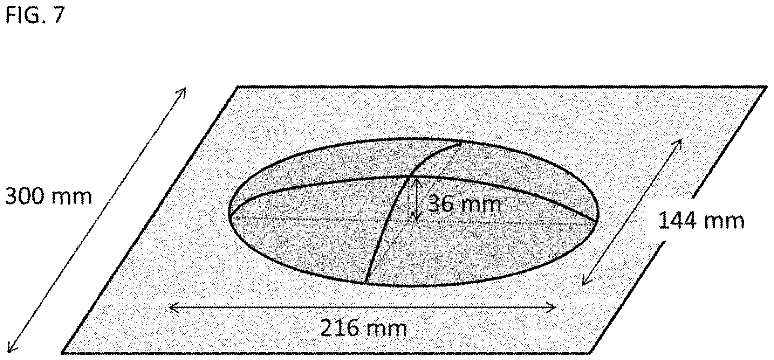

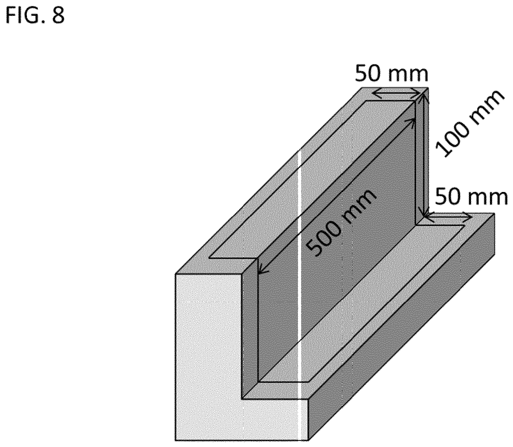

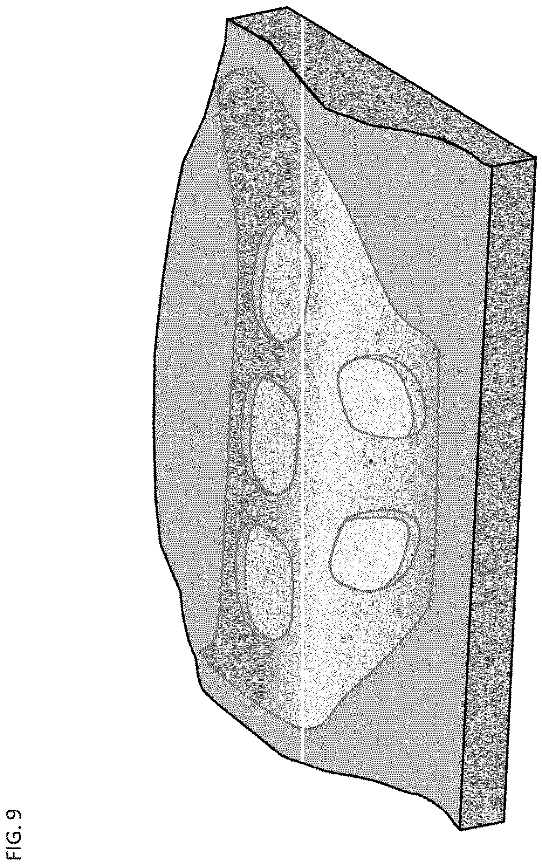

The drapability of the reinforced fiber laminate sheet was evaluated in the following three items: draping in a simple element shape die (Fig. 7) that is a shape obtained by cutting an oval sphere in the horizontal direction, a model shape die 1 (Fig. 8) simulating the shape of a Z-type stringer used in a skin/stringer structure of aircraft, and a model shape die 2 (Fig. 9) simulating the shape of a trunk lid of an automobile. The evaluation criteria for the drapability of the reinforced fiber laminate sheet are shown below.

AA: No wrinkle

A: 4 or less wrinkles in the out-of-plane direction

B: 5 or more and 10 or less wrinkles in the out-of-plane direction

C: 10 or more wrinkles in the out-of-plane direction

In addition, the evaluation criteria for the form stability of the reinforced fiber laminate sheet are shown below.

AA: No delamination

A: Gap between delaminated reinforced fiber bundles is less than 3 mm at maximum

B: Gap between delaminated reinforced fiber bundles is 3 mm or more and less than 5 mm at maximum

C: Gap between delaminated reinforced fiber bundles is 5 mm or more at maximum

Meanwhile, as for the evaluation of the fiber-reinforced resin molded body, a fiber-reinforced resin molded body obtained by molding, by the RTM, a preform in the form of the model shape die 1 or 2 was used. The fiber-reinforced resin molded body was visually observed and evaluated based on the degree of occurrence of defects such as wrinkles in the reinforced fiber bundle layers in the molded body. The evaluation criteria for the fiber-reinforced resin molded body are shown below.

AA: No defects such as wrinkles

A: 4 or less defects such as wrinkles

B: 5 or more and 10 or less defects such as wrinkles

C: 10 or more defects such as wrinkles

[Reference Example 1] Reinforced fiber bundle 1

A carbon fiber "Torayca" T700SC (number of single yarns: 24,000) manufactured by Toray Industries, Inc. was spread with a fiber spreading machine having a fiber spreading roller so that the fiber would have a width of 25 mm. Then, a fixing material made from a bisphenol A epoxy resin (XB3366 manufactured by Huntsman, $T_g$: 80°C) having an average particle size of 150 $\mu$m was attached to the carbon fiber at a rate of 4 wt% based on the weight of the carbon fiber. Further, the carbon fiber to which the fixing material was attached was heated at 200°C in a heating apparatus to melt part of the fixing material so that the fixing material would not fall of in the subsequent steps, whereby a reinforced fiber bundle 1 was obtained.

[Reference Example 2] Matrix resin

A two-component epoxy resin (base resin: jER 828 manufactured by Mitsubishi Chemical Corporation, curing agent: an acid anhydride curing agent manufactured by Toray Industries, Inc.) was used as a matrix resin.

[Reference Example 3] Indenter plate 1

A copper indenter plate that has round protrusions each having a radius (r) of 2.5 mm and a height of 1 mm arranged at apex positions of a square grid having a side length ($L_1$) of 20 mm ($L_1/3$ = 6.7 mm).

[Reference Example 4] Indenter plate 2

A copper indenter plate that has square protrusions each having a side length of 7.07 mm and a height of 1 mm arranged at apex positions of a square grid having a side length ($L_1$) of 20 mm ($L_1/3$ = 6.7 mm). In this indenter plate, the radius (r) is 5.0 mm.

[Reference Example 5] Indenter plate 3

A copper indenter plate that has round protrusions each having a radius (r) of 1.25 mm and a height of 1 mm arranged at apex positions of a square grid having a side length ($L_1$) of 5 mm ($L_1/3$ = 1.7 mm).

[Reference Example 6] Indenter plate 4

A copper indenter plate that has round protrusions each having a radius (r) of 2.5 mm and a height of 1 mm arranged at apex positions of an equilateral triangular grid having a side length ($L_1$) of 20 mm ($L_1/3$ = 6.7 mm).

[Reference Example 7] Indenter plate 5

A copper indenter plate that has round protrusions each having a radius (r) of 2.5 mm and a height of 1 mm arranged at apex positions of a regular hexagonal grid having a side length ($L_1$) of 20 mm ($L_1/3$ = 6.7 mm).

[Reference Example 8] Indenter plate 6

A copper indenter plate that has round protrusions each having a radius (r) of 2.5 mm and a height of 1 mm arranged at random positions.

[Reference Example 9] Indenter plate 7

A copper indenter plate that has round protrusions each having a radius (r) of 2.5 mm and a height of 1 mm arranged at apex positions of a square grid having a side length ($L_1$) of 5 mm ($L_1/3$ = 1.7 mm).

[Reference Example 10] Flat plate 1

A copper flat plate that does not have protrusions unlike the indenter plates 1 to 7.

[Example 1]

The reinforced fiber bundles 1 obtained in Reference Example 1 aligned in one direction were arranged by an AFP apparatus on a table capable of adsorbing and holding reinforced fiber bundles by a mechanism based on electrostatic attraction to produce a reinforced fiber bundle layer (reinforced fiber bundle layers 1 to 8). Table 1 shows the produced reinforced fiber bundle layers for each shape. Those used for the evaluation of drapability of the reinforced fiber laminate sheet in a simple element shape die were reinforced fiber bundle layers 1 and 2 having a size of 300 mm × 300 mm, those used for the evaluation of drapability of the reinforced fiber laminate sheet in a model shape die 1 were reinforced fiber bundle layers 3 and 4 having a size of 500 mm × 200 mm, and those used for the evaluation of drapability of the reinforced fiber laminate sheet in a model shape die 2 were reinforced fiber bundle layers 5 to 8 having a size of 1.8 m × 1.3 m and corresponding to the model shape die 2.

[Table 1]

[Table 1]

| Die for shaping | Reinforced fiber bundle layer (Fiber orientation is shown inside circles) | |
|---|---|---|
| Simple element shape die | 300 mm / 300 mm — Reinforced fiber bundle layer 1 | 300 mm / 300 mm — Reinforced fiber bundle layer 2 |
| Model shape die 1 (Aircraft Z-type stringer shape) | 500 mm / 200 mm — Reinforced fiber bundle layer 3 | 500 mm / 200 mm — Reinforced fiber bundle layer 4 |
| Model shape die 2 (Automobile trunk lid shape) | 1.8 m / 1.3 m — Reinforced fiber bundle layer 5, Reinforced fiber bundle layer 6 | Reinforced fiber bundle layer 7, Reinforced fiber bundle layer 8 |

(Evaluation of drapability of reinforced fiber laminate sheet in simple element shape die)

After one reinforced fiber bundle layer 1 was arranged on the table, a reinforced fiber bundle layer 2 for the second layer was arranged so as to from an angel of 90° with the fiber orientation angle of the reinforced fiber bundles in the first layer.

Then, the indenter plate 1 (area rate of the fixing portions to the fixing region: 5%) heated to 150°C was pressed against the resulting laminate so that the pressure on the protrusion portions would be 120 kPa for 3 seconds. In this way, only the protrusion portions arranged in a grid were fixed to form fixing portions, and a reinforced fiber laminate sheet (1A) was obtained. The portion pressed by the indenter plate 1, that is, the fixing region, accounted for 100% in area rate in the reinforced fiber laminate sheet. In the following examples, in the case where a flat plate-shaped indenter having round protrusions was used, the area of the protrusions was taken as the area of the fixing portions.

Evaluation results of the drapability and form stability of the reinforced fiber laminate sheet are shown in Tables 2 and 3. No wrinkles or delamination was observed in the reinforced fiber laminate sheet after draping.

(Evaluation of drapability of reinforced fiber laminate sheet in model shape die 1)

After one reinforced fiber bundle layer 3 was arranged on the table, a reinforced fiber bundle layer 4 for the second layer was arranged so as to form an angle of 90° with the fiber orientation angle of the reinforced fiber bundles in the first layer.

Then, the indenter plate 1 (area rate of the fixing portions to the fixing region: 5%) heated to 150°C was pressed against the resulting laminate so that the pressure on the protrusion portions would be 120 kPa for 3 seconds. In this way, only the protrusion portions arranged in a grid were fixed to form fixing portions, and a reinforced fiber laminate sheet (1B) was obtained. The portion pressed by the indenter plate 1, that is, the fixing region, accounted for 100% in area rate in the reinforced fiber laminate sheet.

Evaluation results of the drapability and form stability of the reinforced fiber laminate sheet are shown in Tables 2 and 3. No wrinkles or delamination was observed in the reinforced fiber laminate sheet after draping.

(Evaluation of molded body properties of fiber-reinforced resin molded body in model shape die 1)

Four reinforced fiber laminate sheets (1B) were laminated on the model shape die 1, and were draped to give a preform. Then, the obtained preform was placed in a die heated to 130°C, the die was clamped and pressurized at 4 MPa to make the inside of the cavity substantially vacuum, and then the matrix resin of Reference Example 3 was injected into the cavity at an injection pressure of 0.1 MPa. After injection, the temperature and pressure of the die were maintained to sufficiently cure the matrix resin, the die was opened, and the resulting molded body was removed from the die to give a fiber-reinforced resin molded body (1C).

The evaluation results of the fiber-reinforced resin molded body are shown in Tables 2 and 3. As a result of visual check, no wrinkles of the reinforced fiber bundle layers were observed in the molded body, and the molded body was very satisfactory.

(Evaluation of drapability of reinforced fiber laminate sheet in model shape die 2)

After one reinforced fiber bundle layer 5 was arranged on the table, a reinforced fiber bundle layer 6 for the second layer was arranged so as to form an angle of 90° with the fiber orientation angle of the reinforced fiber bundles in the first layer.

Then, the indenter plate 1 (area rate of the fixing portions to the fixing region: 5%) heated to 150°C was pressed against the resulting laminate so that the pressure on the protrusion portions would be 120 kPa for 3 seconds. In this way, only the protrusion portions arranged in a grid were fixed to form fixing portions, and a reinforced fiber laminate sheet (1D) was obtained. The portion pressed by the indenter plate 1, that is, the fixing region, accounted for 100% in area rate in the reinforced fiber laminate sheet.

Evaluation results of the drapability and form stability of the reinforced fiber laminate sheet are shown in Tables 2 and 3. No wrinkles or delamination was observed in the reinforced fiber laminate sheet after draping.

(Evaluation of molded body properties of fiber-reinforced resin molded body in model shape die 2)

A reinforced fiber laminate sheet (1D-2) was produced similarly to the case of the reinforced fiber laminate sheet (1D) except that after one reinforced fiber bundle layer 7 was arranged on the table, a reinforced fiber bundle layer 8 for the second layer was arranged so as to form an angle of 90° with the fiber orientation angle of the reinforced fiber bundles in the first layer. Four reinforced fiber laminate sheets (1D and 1D-2) were symmetrically laminated on each other on the actual shape model 2 and draped to give a preform. Then, the obtained preform was placed in a die heated to 130°C, the die was clamped and pressurized at 4 MPa to make the inside of the cavity substantially vacuum, and then the matrix resin of Reference Example 3 was injected into the cavity at an injection pressure of 0.1 MPa. After injection, the temperature and pressure of the die were maintained to sufficiently cure the matrix resin, the die was opened, and the resulting molded body was removed from the die to give a fiber-reinforced resin molded body (1E).

The evaluation results of the fiber-reinforced resin molded body are shown in Tables 2 and 3. As a result of visual check, no wrinkles of the reinforced fiber bundle layers were observed in the molded body, and the molded body was very satisfactory.

[Example 2]

Reinforced fiber laminate sheets (2A), (2B), and (2D) as well as fiber-reinforced resin molded bodies (2C) and (2E) were obtained in the same manner as in Example 1 except that the indenter plate used in fixing the reinforced fiber bundle layers together was changed to the indenter plate 2 (area rate of the fixing portions to the fixing region: 10.7%).

The evaluation results of the reinforced fiber laminate sheets and the evaluation results of the fiber-reinforced resin molded bodies are shown in Table 2. As for the drapability and form stability, 1 wrinkle was observed in the simple element shape die (2A), 1 wrinkle was observed in the model shape die 1 (2B), and 1 wrinkle was observed and delamination of fiber bundles of 2 mm at maximum was observed at the end in the model shape die 2 (2C). However, no wrinkles or delamination that might cause problems was observed. The molded bodies were also visually checked. As a result, although 2 wrinkles of the reinforced fiber bundles were observed in the model shape die 1 (2D), and 2 wrinkles of the reinforced fiber bundles were observed in the model shape die 2 (2E), the obtained molded bodies were satisfactory.

[Example 3]

Reinforced fiber laminate sheets (3A), (3B), and (3D) as well as fiber-reinforced resin molded bodies (3C) and (3E) were obtained in the same manner as in Example 1 except that the indenter plate used in fixing the reinforced fiber bundle layers together was changed to the indenter plate 3 (area rate of the fixing portions to the fixing region: 20%).

The evaluation results of the reinforced fiber laminate sheets and the evaluation results of the fiber-reinforced resin molded bodies are shown in Tables 2 and 3. As for the drapability and form stability, 2 wrinkles were observed in the simple element shape die (3A), 2 wrinkles were observed in the model shape die 1 (3B), and 2 wrinkles were observed and delamination of fiber bundles of 2 mm at maximum was observed at the end in the model shape die 2 (3C). However, no wrinkles or delamination that might cause problems was observed. The molded bodies were also visually checked. As a result, although 3 wrinkles of the reinforced fiber bundle layers were observed in the model shape die 1 (3D), and 3 wrinkles of the reinforced fiber bundle layers were observed in the model shape die 2 (3E), the obtained molded bodies were satisfactory.

[Example 4]

Reinforced fiber laminate sheets (4A), (4B), and (4D) as well as fiber-reinforced resin molded bodies (4C) and (4E) were obtained in the same manner as in Example 1 except that the indenter plate used in fixing the reinforced fiber bundle layers together was changed to the indenter plate 4 (area rate of the fixing portions to the fixing region: 6%).

The evaluation results of the reinforced fiber laminate sheets and the evaluation results of the fiber-reinforced resin molded bodies are shown in Tables 2 and 3. As for the drapability and form stability, 5 wrinkles were observed in the simple element shape die (4A), 6 wrinkles were observed and delamination of fiber bundles of 3 mm at maximum was observed at the end in the model shape die 1 (4B), and 6 wrinkles were observed and delamination of fiber bundles of 4 mm at maximum was observed at the end in the model shape die 2 (4C). However, no wrinkles or delamination that might cause problems was observed. The molded bodies were also visually checked. As a result, although 5 wrinkles of the reinforced fiber bundle layers were observed in the model shape die 1 (4D), and 6 wrinkles of the reinforced fiber bundle layers were observed in the model shape die 2 (4E), the obtained molded bodies were satisfactory.

[Example 5]

Reinforced fiber laminate sheets (5A), (5B), and (5D) as well as fiber-reinforced resin molded bodies (5C) and (5E) were obtained in the same manner as in Example 1 except that the indenter plate used in fixing the reinforced fiber bundle layers together was changed to the indenter plate 5 (area rate of the fixing portions to the fixing region: 4%).

The evaluation results of the reinforced fiber laminate sheets and the evaluation results of the fiber-reinforced resin molded bodies are shown in Tables 2 and 3. As for the drapability and form stability, 2 wrinkles were observed in the simple element shape die (5A), 3 wrinkles were observed and delamination of fiber bundles of 2 mm at maximum was observed in the model shape die 1 (5B), and 3 wrinkles were observed and delamination of fiber bundles of 2 mm at maximum was observed at the end in the model shape die 2 (5C). However, no wrinkles or delamination that might cause problems was observed. The molded bodies were also visually checked. As a result, although 3 wrinkles of the reinforced fiber bundle layers were observed in the model shape die 1 (5D), and 3 wrinkles of the reinforced fiber bundle layers were observed in the model shape die 2 (5E), the obtained molded bodies were satisfactory.

[Example 6]

Reinforced fiber laminate sheets (6A), (6B), and (6D) as well as fiber-reinforced resin molded bodies (6C) and (6E) were obtained in the same manner as in Example 1 except that the indenter plate used in fixing the reinforced fiber bundle layers together was changed to the indenter plate 6 (area rate of the fixing portions to the fixing region: 5%).
The evaluation results of the reinforced fiber laminate sheets and the evaluation results of the fiber-reinforced resin molded bodies are shown in Tables 2 and 3. As for the drapability and form stability, delamination of the reinforced fiber bundles occurred at many sites mainly at the end of the reinforced fiber laminate sheet, and delamination of 4 mm at maximum occurred in the simple element shape die (6A). Similar delamination occurred, delamination of 4 mm at maximum occurred, and 5 wrinkles in the out-of-plane direction occurred in the model shape die 1 (6B) and the model shape die 2 (6C). The molded bodies were also visually checked. As a result, although 8 wrinkles of the reinforced fiber bundle layers were observed in the model shape die 1 (6D), and 9 wrinkles of the reinforced fiber bundle layers were observed in the model shape die 2 (6E), the obtained molded bodies had no problem in use because all the wrinkles were generated at the end, that is, a region outside the product.

[Example 7]

A reinforced fiber laminate sheet (7A) was obtained in the same manner as in Example 1 except that the following two fixing regions (R1) and (R2) were produced.

**(R1) A region** in the range of within 20 mm from the outer periphery of the reinforced fiber laminate sheet

(R2) A square region that is positioned at a site where the center of the reinforced fiber laminate sheet and the center of gravity of a 100 mm × 100 mm square coincide with each other, and that has sides parallel to the outer periphery of the reinforced fiber laminate sheet.

In this case, the area rate of the fixing portions to the fixing region is 36%.
The evaluation results of the reinforced fiber laminate sheet are shown in Tables 4 and 5. As for the drapability and form stability, no wrinkles were observed, but delamination of fiber bundles of 4 mm at maximum was observed in the simple element shape die (7A).

[Comparative Example 1]

Reinforced fiber laminate sheets (8A), (8B), and (8D) were obtained in the same manner as in Example 1 except that the indenter plate used in fixing the reinforced fiber bundle layers together was changed to the indenter plate 1 (fixing portions: whole sheet (the area of the fixing portions is the same as the sheet area (both 100 mm$^2$ or more)), area rate of the fixing portions to the fixing region: 100%).
The evaluation results of the reinforced fiber laminate sheets are shown in Tables 4 and 5. As for the drapability and form stability, although no delamination of fiber bundles was observed, part of the reinforced fiber laminate sheet was buckled in the out-of-plane direction, and overlapping wrinkles occurred in the simple element shape die (8A). Although no delamination of fiber bundles was observed, similar wrinkles occurred also in the model shape die 1 (8B) and the model shape die 2 (8C), and it was impossible to use the reinforced fiber laminate sheets for molding into a fiber-reinforced resin molded body.

[Comparative Example 2]

Reinforced fiber laminate sheets (9A), (9B), and (9D) were obtained in the same manner as in Example 1 except that the indenter plate used in fixing the reinforced fiber bundle layers together was changed to the indenter plate 7 (area rate of the fixing portions to the fixing region: 79%).
The evaluation results of the reinforced fiber laminate sheets are shown in Tables 4 and 5. As for the drapability and form stability, although no delamination of fiber bundles was observed, part of the reinforced fiber laminate sheet was buckled in the out-of-plane direction, and overlapping wrinkles occurred in the simple element shape die (9A). Although no

## EP 3 437 851 B1

delamination of fiber bundles was observed, similar wrinkles occurred also in the model shape die 1 (9B) and the model shape die 2 (9C), and it was impossible to use the reinforced fiber laminate sheets for molding into a fiber-reinforced resin molded body.

[Comparative Example 3]

A reinforced fiber laminate sheet (10A) was obtained in the same manner as in Example 1 except that the following one fixing region (R1) was produced.
(R1) A region in the range of within 20 mm from the outer periphery of the reinforced fiber laminate sheet
In this case, the area rate of the fixing portions to the fixing region is 25%.
The evaluation results of the reinforced fiber laminate sheet are shown in Tables 4 and 5. As for the drapability and form stability, 4 wrinkles occurred, delamination of the reinforced fiber bundles occurred at many sites in the unfixed region of the reinforced fiber laminate sheet, and delamination of 10 mm at maximum occurred at 5 or more sites in the simple element shape die (10A).

[Comparative Example 4]

Reinforced fiber laminate sheets (11A), (11B), and (11D) were obtained in the same manner as in Example 1 except that in the step of applying the fixing material in Example 1, the application amount was doubled, and the area rate of the fixing element to the fixing portion was changed to 85%.
The evaluation results of the reinforced fiber laminate sheets are shown in Tables 4 and 5. As for the drapability and form stability, although no delamination of fiber bundles was observed, part of the reinforced fiber laminate sheet was buckled in the out-of-plane direction, and overlapping wrinkles occurred in the simple element shape die (11A). Although no delamination of fiber bundles was observed, similar wrinkles occurred also in the model shape die 1 (11B) and the model shape die 2 (11C), and it was impossible to use the reinforced fiber laminate sheets for molding into a fiber-reinforced resin molded body.

[Table 2]

[Table 2]

|  | Example 1 | Example 2 | Example 3 | Example 4 | Example 5 | Example 6 |
|---|---|---|---|---|---|---|
| Shape of indenter | Round | Square | Round | Round | Round | Round |
| Average area of fixing portions (mm$^2$) | 20 | 79 | 5 | 20 | 20 | 20 |
| Radius of fixing portion (mm) | 2.5 | 5.0 | 1.25 | 2.5 | 2.5 | 2.5 |
| Distance between centers of fixing portions (mm) | 20 | 20 | 5 | 20 | 20 | 20 |
| Grid shape of fixing portions | Square | Square | Square | Equilateral triangle | Regular hexagon | Random |
| Rate of fixing elements (%) | 43 | 43 | 43 | 43 | 43 | 43 |
| Rate of fixing portions (%) | 5 | 11 | 20 | 6 | 3 | 5 |
| Rate of fixing regions (%) | 100 | 100 | 100 | 100 | 100 | 100 |

[Table 3]

[Table 3]

|  |  | Example 1 | Example 2 | Example 3 | Example 4 | Example 5 | Example 6 |
|---|---|---|---|---|---|---|---|
| Evaluation of simple element shape die | Shapability | AA | A | A | B | A | B |
|  | Form stability | AA | AA | A | B | A | B |
| Evaluation of model shape die 1 | Shapability | AA | A | A | B | A | B |
|  | Form stability | AA | AA | A | B | A | B |
|  | Molded body | AA | A | A | B | B | B |
| Evaluation of model shape die 2 | Shapability | AA | A | A | B | A | B |
|  | Form stability | AA | A | A | B | A | B |
|  | Molded body | AA | A | A | B | B | B |

[Table 4]

[Table 4]

|  | Example 7 | Comparative Example 1 | Comparative Example 2 | Comparative Example 3 | Comparative Example 4 |
|---|---|---|---|---|---|
| Shape of indenter | Round | Round | Round | Round | Round |
| Average area of fixing portions (mm$^2$) | 20 | > 100 | 20 | 20 | 20 |
| Radius of fixing portion (mm) | 2.5 | Whole area | 2.5 | 2.5 | 2.5 |
| Distance between centers of fixing portions (mm) | 20 |  | 5 | 20 | 20 |
| Grid shape of fixing portions | Square |  | Square | Square | Square |
| Rate of fixing elements (%) | 43 | 43 | 43 | 43 | 85 |
| Rate of fixing portions (%) | 5 | 100 | 79 | 5 | 5 |
| Rate of fixing regions (%) | 36 | 100 | 100 | 25 | 100 |

[Table 5]

[Table 5]

|  |  | Example 7 | Comparative Example 1 | Comparative Example 2 | Comparative Example 3 | Comparative Example 4 |
|---|---|---|---|---|---|---|
| Evaluation of simple element shape die | Shapability | AA | C | C | A | C |
|  | Form stability | B | AA | AA | C | AA |
| Evaluation of model shape die 1 | Shapability | - | C | C | - | C |
|  | Form stability | - | AA | AA | - | AA |
|  | Molded body | - | - | - | - | - |

(continued)

|  |  | Example 7 | Comparative Example 1 | Comparative Example 2 | Comparative Example 3 | Comparative Example 4 |
|---|---|---|---|---|---|---|
| Evaluation of model shape die 2 | Shapability | - | C | C | - | C |
|  | Form stability | - | AA | AA | - | AA |
|  | Molded body | - |  |  | - | - |

DESCRIPTION OF REFERENCE SIGNS

101, 301: Reinforced fiber laminate sheet

102, 103, 302, 303: Reinforced fiber bundle layer

104, 204, 304, 502: Fixing portion

105, 305, 501: Fixing element

106, 306, 503: Fixing region

107, 504: Fixing material

307: Frame-shaped fixing region

208: Grid

401, 601: First reinforced fiber bundle layer arrangement step

402, 603: Second reinforced fiber bundle layer arrangement step

403, 604: Sheet forming step

505: First reinforced fiber bundle layer

602: Fixing material placement step

INDUSTRIAL APPLICABILITY

The method for manufacturing a reinforced fiber laminate sheet of the present invention is capable of providing a reinforced fiber laminate sheet that can be suitably used even if a fiber reinforced plastic molded body has a shape having a complicated curved surface.

Furthermore, the fiber-reinforced resin molded body produced from the reinforced fiber laminate sheet of the present invention is suitable for primary structural members, secondary structural members, and exterior and interior components in transportation equipment such as aircraft members, automobile members, and automatic two-wheel vehicle members, and members for general industrial use such as windmill blades, robot arms, and medical equipment such as X-ray top panels.

Claims

1. A reinforced fiber laminate sheet comprising: a first reinforced fiber bundle layer and a second reinforced fiber bundle layer that are each formed of a plurality of reinforced fiber bundles aligned in one direction, that are arranged to have different fiber orientations from each other, and in which reinforced fiber bundles in one layer have no direct binding force between each other, the first reinforced fiber bundle layer and the second reinforced fiber bundle layer being fixed to each other by a fixing element, which is a fixing material involved in fixation among fixing materials present between the first and second reinforced fiber bundle layers, so that the first reinforced fiber bundle layer and the second reinforced fiber bundle layer are integrated with each other, the reinforced fiber laminate sheet satisfying the following conditions (i) and (ii):

(i) the reinforced fiber laminate sheet has one or more fixing portions each including at least one fixing element at a fixing surface between the first reinforced fiber bundle layer and the second reinforced fiber bundle layer, and the fixing portions have an average area $S_1$ of 100 mm$^2$ or less, wherein "fixing portion" means a portion determined by the following procedure:

1) if the distance between a fixing element and another fixing element is 1 mm or less, these fixing elements are assumed to be continuous with each other;
2) a set of fixing elements that are directly or indirectly continuous with each other is regarded as a fixing element group, wherein as for fixing elements that are not continuous with any other fixing element, one fixing element is regarded as one fixing element group;
3) a part surrounded by a smallest circle including all the fixing elements belonging to one fixing element group is regarded as a fixing portion, wherein areas of circles defined as fixing portions are calculated, and the average area of all the fixing portions included in the reinforced fiber sheet is defined as $S_1$; **characterized in that**

(ii) in each of the fixing portions, an area rate of the fixing element to the fixing portion is 0.1% or more and 80% or less,

wherein the reinforced fiber laminate sheet has a fixing region including at least one of the fixing portions at the fixing surface between the first reinforced fiber bundle layer and the second reinforced fiber bundle layer, wherein an area rate of the fixing region to the reinforced fiber laminate sheet is 30% or more and 100% or less, wherein "fixing region" means a region determined by the following procedure:

1) if the distance between a fixing portion and another fixing portion is 100 mm or less, these fixing portions are assumed to be continuous with each other;
2) a set of fixing portions that are directly or indirectly continuous with each other is regarded as a fixing portion group, wherein a set of fixing portions composed of two or less fixing portions, or a set of fixing portions that is composed of two or more fixing portions and in which all the fixing portions line up in a straight line is not a fixing portion group;
3) a polygon that is obtained by connecting the centers of fixing portions belonging to one fixing portion group with a straight line, and that has a largest area among polygons each including all the fixing portions belonging to the fixing portion group in the inside or on the periphery thereof is regarded as a fixing region, wherein the average area of all the fixing regions included in the reinforced fiber laminate sheet is defined as $S_2$, and

wherein the reinforced fiber laminate sheet has at least one fixing region in which an area rate of one or more fixing portions to the fixing region is 1% or more and 50% or less.

2. The reinforced fiber laminate sheet according to claim 1, further satisfying the following condition (iv):
(iv) the reinforced fiber laminate sheet has a fixing region in which centers of the fixing portions are arranged in a polygonal grid.

3. The reinforced fiber laminate sheet according to claim 1 or 2, further satisfying the following condition (v):
(v) centers of the fixing portions are arranged in a regular polygonal grid having a side length $L_1$ (mm), and the length $L_1$ (mm) satisfies the following expression (1):

$$1 \le L_1 \le 50 \quad (1).$$

4. A fiber-reinforced resin molded body comprising: the reinforced fiber laminate sheet according to any one of claims 1 to 3; and a matrix resin.

5. A method for manufacturing a reinforced fiber laminate sheet according to any one of claims 1 to 3, the method comprising the following steps (a) to (c):

(a) a first reinforced fiber bundle layer arrangement step of arranging a plurality of reinforced fiber bundles aligned in one direction on a table to give a first reinforced fiber bundle layer in which reinforced fiber bundles in one layer have no direct binding force between each other;

(b) a second reinforced fiber bundle layer arrangement step of further arranging, on the first reinforced fiber bundle layer, a plurality of reinforced fiber bundles aligned in one direction that is different from a fiber direction of the first reinforced fiber bundle layer to give a second reinforced fiber bundle layer in which reinforced fiber bundles in one layer have no direct binding force between each other, and thus producing a reinforced fiber laminate; and

(c) a sheet forming step of obtaining the reinforced fiber laminate sheet using a sheet forming mechanism of partially heating and/or pressurizing the reinforced fiber laminate via a protrusion on a surface in contact with the reinforced fiber laminate to melt a fixing material between the first reinforced fiber bundle layer and the second reinforced fiber bundle layer.

6. The method for manufacturing a reinforced fiber laminate sheet according to claim 5, comprising the following step (a1) between steps (a) and (b):
(a1) a fixing material placement step of placing a fixing material on the first reinforced fiber bundle layer.

7. The method for manufacturing a reinforced fiber laminate sheet according to claim 5 or 6, wherein the reinforced fiber bundles in step (a) and/or step (b) are reinforced fiber bundles to which a fixing material is attached.

8. The method for manufacturing a reinforced fiber laminate sheet according to any one of claims 5 to 7, further satisfying the following condition (iv):
(iv) the reinforced fiber laminate sheet has a fixing region in which centers of the fixing portions are arranged in a polygonal grid.

9. The method for manufacturing a reinforced fiber laminate sheet according to any one of claims 5 to 8, further satisfying the following condition (v):
(v) centers of the fixing portions are arranged in a regular polygonal grid having a side length $L_1$ (mm), and the length $L_1$ (mm) satisfies the following expression (1):

$$1 \le L_1 \le 50 \qquad (1).$$

10. The method for manufacturing a reinforced fiber laminate sheet according to any one of claims 5 to 9, comprising the following step (d) simultaneously with or after step (c):
(d) a fixing frame forming step of forming a fixing frame in at least a part of an end of the reinforced fiber laminate sheet.

11. The method for manufacturing a reinforced fiber laminate sheet according to any one of claims 5 to 10, wherein the table has means for adsorbing and holding the reinforced fiber bundles, and the means has a mechanism based on electrostatic attraction and/or a mechanism based on attractive force generated by flow of air.

**Patentansprüche**

1. Verstärkte Faserlaminatbahn, umfassend: eine erste verstärkte Faserbündelschicht und eine zweite verstärkte Faserbündelschicht, die jeweils aus einer Vielzahl von verstärkten Faserbündeln gebildet sind, die in einer Richtung ausgerichtet sind, die so angeordnet sind, dass sie voneinander verschiedene Faserorientierungen aufweisen, und in denen verstärkte Faserbündel in einer Schicht keine direkte Bindungskraft zwischen einander aufweisen, wobei die erste verstärkte Faserbündelschicht und die zweite verstärkte Faserbündelschicht durch ein Fixierungselement aneinander fixiert sind, das ein Fixierungsmaterial ist, das an der Fixierung unter Fixierungsmaterialien beteiligt ist, die zwischen der ersten und der zweiten verstärkten Faserbündelschicht vorhanden sind, so dass die erste verstärkte Faserbündelschicht und die zweite verstärkte Faserbündelschicht miteinander integriert sind, wobei die verstärkte Faserlaminatbahn die folgenden Bedingungen (i) und (ii) erfüllt:

(i) die verstärkte Faserlaminatbahn weist einen oder mehrere Fixierungsabschnitte auf, die jeweils mindestens ein Fixierungselement an einer Fixierungsfläche zwischen der ersten verstärkten Faserbündelschicht und der zweiten verstärkten Faserbündelschicht enthalten, und die Fixierungsabschnitte weisen eine durchschnittliche Fläche $S_1$ von 100 mm$^2$ oder weniger auf, wobei "Fixierungsabschnitt" einen Abschnitt bedeutet, der durch das folgende Verfahren bestimmt wird:

1) wenn der Abstand zwischen einem Fixierungselement und einem anderen Fixierungselement 1 mm oder weniger beträgt, wird davon ausgegangen, dass diese Fixierungselemente kontinuierlich miteinander sind;

2) ein Satz von Fixierungselementen, die direkt oder indirekt kontinuierlich miteinander sind, wird als eine Fixierungselementgruppe betrachtet, wobei für Fixierungselemente, die nicht kontinuierlich mit einem anderen Fixierungselement sind, ein Fixierungselement als eine Fixierungselementgruppe betrachtet wird;

3) ein Teil, der von einem kleinsten Kreis umgeben ist, der alle Fixierungselemente enthält, die zu einer Fixierungselementgruppe gehören, wird als ein Fixierungsabschnitt betrachtet, wobei Flächen von Kreisen, die als Fixierungsabschnitte definiert sind, berechnet werden und die durchschnittliche Fläche aller Fixierungsabschnitte, die in der verstärkten Faserbahn enthalten sind, als $S_1$ definiert ist; **dadurch gekennzeichnet, dass**

(ii) in jedem der Fixierungsabschnitte eine Flächenrate des Fixierungselements zu dem Fixierungsabschnitt 0,1 % oder mehr und 80 % oder weniger beträgt,

wobei die verstärkte Faserlaminatbahn einen Fixierungsbereich aufweist, der mindestens einen der Fixierungsabschnitte an der Fixierungsfläche zwischen der ersten verstärkten Faserbündelschicht und der zweiten verstärkten Faserbündelschicht enthält, wobei eine Flächenrate des Fixierungsbereichs zu der verstärkten Faserlaminatbahn 30 % oder mehr und 100 % oder weniger beträgt, wobei "Fixierungsbereich" einen Bereich bedeutet, der durch das folgende Verfahren bestimmt wird:

1) wenn der Abstand zwischen einem Fixierungsabschnitt und einem anderen Fixierungsabschnitt 100 mm oder weniger beträgt, wird davon ausgegangen, dass diese Fixierungsabschnitte kontinuierlich miteinander sind;

2) ein Satz von Fixierungsabschnitten, die direkt oder indirekt kontinuierlich miteinander sind, wird als eine Fixierungsabschnittgruppe betrachtet, wobei ein Satz von Fixierungsabschnitten, der aus zwei oder weniger Fixierungsabschnitten besteht, oder ein Satz von Fixierungsabschnitten, der aus zwei oder mehr Fixierungsabschnitten besteht und in dem alle Fixierungsabschnitte in einer geraden Linie aufeinander ausgerichtet sind, keine Fixierungsabschnittgruppe ist;

3) ein Polygon, das durch Verbinden der Mitten von Fixierungsabschnitten, die zu einer Fixierungsabschnittgruppe gehören, mit einer geraden Linie erhalten wird und das eine größte Fläche unter Polygonen aufweist, die jeweils alle Fixierungsabschnitte enthalten, die zu der Fixierungsabschnittgruppe im Inneren oder am Umfang davon gehören, wird als ein Fixierungsbereich betrachtet, wobei die durchschnittliche Fläche aller Fixierungsbereiche, die in der verstärkten Faserlaminatbahn enthalten sind, als $S_2$ definiert ist, und

wobei die verstärkte Faserlaminatbahn mindestens einen Fixierungsbereich aufweist, in dem eine Flächenrate von einem oder mehreren Fixierungsabschnitten zu dem Fixierungsbereich 1 % oder mehr und 50 % oder weniger beträgt.

2. Verstärkte Faserlaminatbahn nach Anspruch 1, die ferner die folgende Bedingung (iv) erfüllt:
   (iv) die verstärkte Faserlaminatbahn weist einen Fixierungsbereich auf, in dem Mitten der Fixierungsabschnitte in einem polygonalen Raster angeordnet sind.

3. Verstärkte Faserlaminatbahn nach Anspruch 1 oder 2, die ferner die folgende Bedingung (v) erfüllt:
   (v) Mitten der Fixierungsabschnitte sind in einem regelmäßigen polygonalen Raster mit einer Seitenlänge $L_1$ (mm) angeordnet, und die Länge $L_1$ (mm) erfüllt den folgenden Ausdruck (1):

$$1 \le L_1 \le 50 \quad (1).$$

4. Formkörper aus faserverstärktem Harz, umfassend: die verstärkte Faserlaminatbahn nach einem der Ansprüche 1 bis 3; und ein Matrixharz.

5. Verfahren zur Herstellung einer verstärkten Faserlaminatbahn nach einem der Ansprüche 1 bis 3, wobei das Verfahren die folgenden Schritte (a) bis (c) umfasst:

(a) einen ersten Schritt zur Anordnung einer verstärkten Faserbündelschicht, bei dem eine Vielzahl von verstärkten Faserbündeln, die in einer Richtung ausgerichtet sind, auf einem Tisch angeordnet wird, um eine erste verstärkte Faserbündelschicht zu ergeben, in der verstärkte Faserbündel in einer Schicht keine direkte Bindungskraft zwischen einander aufweisen;

(b) einen zweiten Schritt zur Anordnung einer verstärkten Faserbündelschicht, bei dem ferner auf der ersten verstärkten Faserbündelschicht eine Vielzahl von verstärkten Faserbündeln angeordnet wird, die in einer Richtung ausgerichtet sind, die sich von einer Faserrichtung der ersten verstärkten Faserbündelschicht unterscheidet, um eine zweite verstärkte Faserbündelschicht zu ergeben, in der verstärkte Faserbündel in einer Schicht keine direkte Bindungskraft zwischen einander aufweisen, und so ein verstärktes Faserlaminat hergestellt wird; und

(c) einen Bahnbildungsschritt, bei dem die verstärkte Faserlaminatbahn unter Verwendung eines Bahnbildungsmechanismus erhalten wird, bei dem das verstärkte Faserlaminat über einen Vorsprung auf einer Fläche in Kontakt mit dem verstärkten Faserlaminat teilweise erwärmt und/oder unter Druck gesetzt wird, um ein Fixierungsmaterial zwischen der ersten verstärkten Faserbündelschicht und der zweiten verstärkten Faserbündelschicht zu schmelzen.

6. Verfahren zur Herstellung einer verstärkten Faserlaminatbahn nach Anspruch 5, umfassend den folgenden Schritt (a1) zwischen den Schritten (a) und (b):
(a1) einen Fixierungsmaterialplatzierungsschritt, bei dem ein Fixierungsmaterial auf der ersten verstärkten Faserbündelschicht platziert wird.

7. Verfahren zur Herstellung einer verstärkten Faserlaminatbahn nach Anspruch 5 oder 6, wobei die verstärkten Faserbündel in Schritt (a) und/oder Schritt (b) verstärkte Faserbündel sind, an denen ein Fixierungsmaterial angebracht ist.

8. Verfahren zur Herstellung einer verstärkten Faserlaminatbahn nach einem der Ansprüche 5 bis 7, das ferner die folgende Bedingung (iv) erfüllt:
(iv) die verstärkte Faserlaminatbahn weist einen Fixierungsbereich auf, in dem Mitten der Fixierungsabschnitte in einem polygonalen Raster angeordnet sind.

9. Verfahren zur Herstellung einer verstärkten Faserlaminatbahn nach einem der Ansprüche 5 bis 8, das ferner die folgende Bedingung (v) erfüllt:
(v) Mitten der Fixierungsabschnitte sind in einem regelmäßigen polygonalen Raster mit einer Seitenlänge $L_1$ (mm) angeordnet, und die Länge $L_1$ (mm) erfüllt den folgenden Ausdruck (1):

$$1 \leq L_1 \leq 50 \quad (1).$$

10. Verfahren zur Herstellung einer verstärkten Faserlaminatbahn nach einem der Ansprüche 5 bis 9, umfassend den folgenden Schritt (d) gleichzeitig mit oder nach Schritt (c):
(d) einen Fixierungsrahmenbildungsschritt, bei dem ein Fixierungsrahmen in mindestens einem Teil eines Endes der verstärkten Faserlaminatbahn gebildet wird.

11. Verfahren zur Herstellung einer verstärkten Faserlaminatbahn nach einem der Ansprüche 5 bis 10, wobei der Tisch ein Mittel zum Adsorbieren und Halten der verstärkten Faserbündel aufweist und das Mittel einen Mechanismus aufweist, der auf elektrostatischer Anziehung basiert, und/oder einen Mechanismus, der auf Anziehungskraft basiert, die durch einen Luftstrom erzeugt wird.

**Revendications**

1. Feuille stratifiée de fibres renforcées comprenant : une première couche de faisceau de fibres renforcées et une seconde couche de faisceau de fibres renforcées qui sont chacune formées d'une pluralité de faisceaux de fibres renforcées alignés dans une direction, qui sont agencés pour avoir des orientations de fibres différentes les unes des autres, et dans laquelle les faisceaux de fibres renforcées dans une couche n'ont pas de force de liaison directe entre eux, la première couche de faisceau de fibres renforcées et la seconde couche de faisceau de fibres renforcées étant fixées l'une à l'autre par un élément de fixation, qui est un matériau de fixation impliqué dans la fixation parmi les matériaux de fixation présents entre les première et seconde couches de faisceau de fibres renforcées, de sorte que la première couche de faisceau de fibres renforcées et la seconde couche de faisceau de fibres renforcées soient intégrées l'une à l'autre, la feuille stratifiée de fibres renforcées satisfaisant les conditions (i) et (ii) suivantes :

(i) la feuille stratifiée de fibres renforcées a une ou plusieurs parties de fixation comprenant chacune au moins un élément de fixation au niveau d'une surface de fixation entre la première couche de faisceau de fibres renforcées et la seconde couche de faisceau de fibres renforcées, et les parties de fixation ont une aire moyenne $S_1$ de 100 mm$^2$ ou moins, dans laquelle « partie de fixation » signifie une partie déterminée par la procédure suivante :

1) si la distance entre un élément de fixation et un autre élément de fixation est de 1 mm ou moins, ces éléments de fixation sont supposés être continus les uns avec les autres ;
2) un ensemble d'éléments de fixation qui sont directement ou indirectement continus les uns avec les autres est considéré comme un groupe d'éléments de fixation, dans lequel, pour les éléments de fixation qui ne sont pas continus avec un quelconque autre élément de fixation, un élément de fixation est considéré comme un groupe d'éléments de fixation ;
3) une partie entourée par un cercle le plus petit comprenant tous les éléments de fixation appartenant à un groupe d'éléments de fixation est considérée comme une partie de fixation, dans laquelle des aires de cercles définies comme des parties de fixation sont calculées, et l'aire moyenne de toutes les parties de fixation incluses dans la feuille de fibres renforcées est définie comme $S_1$ ; **caractérisée en ce que**

(ii) dans chacune des parties de fixation, un taux d'aire de l'élément de fixation par rapport à la partie de fixation est de 0,1 % ou plus et de 80 % ou moins,

dans laquelle la feuille stratifiée de fibres renforcées a une région de fixation comprenant au moins l'une des parties de fixation au niveau de la surface de fixation entre la première couche de faisceau de fibres renforcées et la seconde couche de faisceau de fibres renforcées, dans laquelle un taux d'aire de la région de fixation par rapport à la feuille stratifiée de fibres renforcées est de 30 % ou plus et de 100 % ou moins, dans laquelle « région de fixation » signifie une région déterminée par la procédure suivante :

1) si la distance entre une partie de fixation et une autre partie de fixation est de 100 mm ou moins, ces parties de fixation sont supposées être continues les unes avec les autres ;
2) un ensemble de parties de fixation qui sont directement ou indirectement continues les unes avec les autres est considéré comme un groupe de parties de fixation, dans lequel un ensemble de parties de fixation composé de deux parties de fixation ou moins, ou un ensemble de parties de fixation qui est composé de deux parties de fixation ou plus et dans lequel toutes les parties de fixation s'alignent en ligne droite n'est pas un groupe de parties de fixation ;
3) un polygone qui est obtenu en reliant les centres de parties de fixation appartenant à un groupe de parties de fixation avec une ligne droite, et qui a une aire la plus grande parmi des polygones comprenant chacun toutes les parties de fixation appartenant au groupe de parties de fixation à l'intérieur ou sur la périphérie de celui-ci est considéré comme une région de fixation, dans lequel l'aire moyenne de toutes les régions de fixation incluses dans la feuille stratifiée de fibres renforcées est définie comme $S_2$, et

dans lequel la feuille stratifiée de fibres renforcées a au moins une région de fixation dans laquelle un taux d'aire d'une ou plusieurs parties de fixation par rapport à la région de fixation est de 1 % ou plus et de 50 % ou moins.

2. Feuille stratifiée de fibres renforcées selon la revendication 1, satisfaisant en outre la condition (iv) suivante :
(iv) la feuille stratifiée de fibres renforcées a une région de fixation dans laquelle les centres des parties de fixation sont agencés dans une grille polygonale.

3. Feuille stratifiée de fibres renforcées selon la revendication 1 ou 2, satisfaisant en outre la condition (v) suivante :
(v) les centres des parties de fixation sont agencés dans une grille polygonale régulière ayant une longueur de côté $L_1$ (mm), et la longueur $L_1$ (mm) satisfait l'expression (1) suivante :

$$1 \le L_1 \le 50 \quad (1).$$

4. Corps moulé en résine renforcée de fibres comprenant : la feuille stratifiée de fibres renforcées selon l'une quelconque des revendications 1 à 3 ; et une résine de matrice.

**5.** Procédé de fabrication d'une feuille stratifiée de fibres renforcées selon l'une quelconque des revendications 1 à 3, le procédé comprenant les étapes (a) à (c) suivantes :

(a) une première étape d'agencement de couche de faisceau de fibres renforcées consistant à agencer une pluralité de faisceaux de fibres renforcées alignés dans une direction sur une table pour donner une première couche de faisceau de fibres renforcées dans laquelle les faisceaux de fibres renforcées dans une couche n'ont pas de force de liaison directe entre eux ;

(b) une seconde étape d'agencement de couche de faisceau de fibres renforcées consistant à agencer en outre, sur la première couche de faisceau de fibres renforcées, une pluralité de faisceaux de fibres renforcées alignés dans une direction qui est différente d'une direction de fibres de la première couche de faisceau de fibres renforcées pour donner une seconde couche de faisceau de fibres renforcées dans laquelle les faisceaux de fibres renforcées dans une couche n'ont pas de force de liaison directe entre eux, et ainsi produire un stratifié de fibres renforcées ; et

(c) une étape de formation de feuille consistant à obtenir la feuille stratifiée de fibres renforcées en utilisant un mécanisme de formation de feuille consistant à chauffer et/ou mettre sous pression partiellement le stratifié de fibres renforcées par l'intermédiaire d'une saillie sur une surface en contact avec le stratifié de fibres renforcées pour faire fondre un matériau de fixation entre la première couche de faisceau de fibres renforcées et la seconde couche de faisceau de fibres renforcées.

**6.** Procédé de fabrication d'une feuille stratifiée de fibres renforcées selon la revendication 5, comprenant l'étape (a1) suivante entre les étapes (a) et (b) :

(a1) une étape de placement de matériau de fixation consistant à placer un matériau de fixation sur la première couche de faisceau de fibres renforcées.

**7.** Procédé de fabrication d'une feuille stratifiée de fibres renforcées selon la revendication 5 ou 6, dans lequel les faisceaux de fibres renforcées dans l'étape (a) et/ou l'étape (b) sont des faisceaux de fibres renforcées auxquels un matériau de fixation est fixé.

**8.** Procédé de fabrication d'une feuille stratifiée de fibres renforcées selon l'une quelconque des revendications 5 à 7, satisfaisant en outre la condition (iv) suivante :

(iv) la feuille stratifiée de fibres renforcées a une région de fixation dans laquelle les centres des parties de fixation sont agencés dans une grille polygonale.

**9.** Procédé de fabrication d'une feuille stratifiée de fibres renforcées selon l'une quelconque des revendications 5 à 8, satisfaisant en outre la condition (v) suivante :

(v) les centres des parties de fixation sont agencés dans une grille polygonale régulière ayant une longueur de côté $L_1$ (mm), et la longueur $L_1$ (mm) satisfait l'expression (1) suivante :

$$1 \leq L_1 \leq 50 \qquad (1).$$

**10.** Procédé de fabrication d'une feuille stratifiée de fibres renforcées selon l'une quelconque des revendications 5 à 9, comprenant l'étape (d) suivante simultanément avec ou après l'étape (c) :

(d) une étape de formation de cadre de fixation consistant à former un cadre de fixation dans au moins une partie d'une extrémité de la feuille stratifiée de fibres renforcées.

**11.** Procédé de fabrication d'une feuille stratifiée de fibres renforcées selon l'une quelconque des revendications 5 à 10, dans lequel la table a un moyen pour adsorber et maintenir les faisceaux de fibres renforcées, et le moyen a un mécanisme basé sur une attraction électrostatique et/ou un mécanisme basé sur une force d'attraction générée par un écoulement d'air.

FIG. 1

FIG. 2

FIG. 2a

FIG. 2b

FIG. 2c

FIG. 2d

FIG. 2e

FIG. 2f

FIG. 2g

FIG. 3

$\theta_{1=}+45°$

$y$

$x$

$\theta_{2=}-45°$

301

302

303

304

305

306

307

FIG. 4

FIG. 5

FIG. 6

```
┌─────────────────────┐
│        601          │
└─────────────────────┘
           │
           ▼
┌─────────────────────┐
│        602          │
└─────────────────────┘
           │
           ▼
┌─────────────────────┐
│        603          │
└─────────────────────┘
           │
           ▼
┌─────────────────────┐
│        604          │
└─────────────────────┘
```

FIG. 7

144 mm

36 mm

216 mm

300 mm

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014159099 A
- JP 2009235182 A
- JP 2007276453 A

- JP 2008132650 A
- JP 2006192745 A
- JP 2005022396 A